# EUROPÄISCHE PATENTANMELDUNG

(11) **EP 4 506 096 A2**
(43) Veröffentlichungstag der Anmeldung: **12.02.2025**
(21) Anmeldenummer: 24188649.8
(22) Anmeldetag: 15.07.2024
(51) Int. Cl.: B23K 26/03, B23K 26/042, B23K 26/082

(54) **VERFAHREN ZUM KALIBRIEREN EINES LASERBEARBEITUNGSSYSTEMS SOWIE LASERBEARBEITUNGSSYSTEM ZUR DURCHFÜHRUNG DES VERFAHRENS**

(30) Priorität: 07.08.2023 DE 102023120864
(71) Anmelder: Precitec GmbH & Co. KG, 76571 Gaggenau-Bad Rotenfels (DE)
(72) Erfinder: Walde, Tom, 77652 Offenburg (DE); Moser, Rüdiger, 76316 Malsch (DE); Chang, Li Wen, 76437 Rastatt (DE); Hornbacher, Dennis, 77652 Offenburg (DE)
(74) Vertreter: Ter Meer Steinmeister & Partner

(57) **Zusammenfassung**

Es wird ein Verfahren zum Kalibrieren eines Laserbearbeitungssystems mit einer Scannervorrichtung zum Auslenken eines Laserstrahls auf eine Vielzahl von Positionen auf einer Oberfläche und mit einer Beobachtungsvorrichtung, deren Beobachtungsstrahlengang koaxial zum Laserstrahlengang über die Scannervorrichtung verläuft, angegeben, umfassend ein Kalibrieren der Scannervorrichtung und ein Kalibrieren der Beobachtungsvorrichtung, sowie das Laserbearbeitungssystem zum Bearbeiten eines Werkstücks mittels eines Laserstrahls mit einer Steuerung, die eingerichtet ist, um das Verfahren durchzuführen.

## Beschreibung

### Technisches Gebiet

Die vorliegende Offenbarung betrifft ein Verfahren zum Kalibrieren eines Laserbearbeitungssystems mit einer Scannervorrichtung zum Auslenken eines Laserstrahls auf eine Vielzahl von Positionen auf einer Oberfläche und mit einer Beobachtungsvorrichtung, deren Beobachtungsstrahlengang koaxial zum Laserstrahlengang über die Scannervorrichtung verläuft, umfassend ein Kalibrieren der Scannervorrichtung und ein Kalibrieren der Beobachtungsvorrichtung, sowie ein Laserbearbeitungssystem zum Bearbeiten eines Werkstücks mittels eines Laserstrahls, eingerichtet, um das Verfahren durchzuführen.

### Technischer Hintergrund

In einem System zur Materialbearbeitung mittels Laser, d.h. in einem Laserbearbeitungssystem, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimatoroptik und einer Fokussierungsoptik verwendet, wobei das Laserlicht über eine Lichtleitfaser zugeführt wird. Mittels einer Scannervorrichtung kann der Laserstrahl (d.h. der Bearbeitungslaserstrahl) auf verschiedene Positionen auf dem Werkstück gerichtet werden. Die Scannervorrichtung umfasst üblicherweise zumindest ein Scanelement, z.B. zumindest einen Scanspiegel, der um eine oder zwei Achsen schwenkbar ist, um den Laserstrahl auszulenken. Zur Prozessbeobachtung und/oder zur Prozessüberwachung wird ferner häufig eine koaxiale Beobachtungsvorrichtung, z.B. eine Kamera, eingesetzt, deren optischer Pfad zumindest teilweise koaxial bzw. zusammen mit dem des Laserstrahls über die Scannervorrichtung verläuft.

In herkömmlichen Laserbearbeitungssystemen mit einer Scannervorrichtung, z.B. einer xy-Galvo-Scannervorrichtung mit zwei Scanelementen, wird die Fokusposition durch die Scannereinstellung, d.h. durch die Winkel der Scanelemente, bestimmt. Die Fokusposition zeigt dabei im Allgemeinen einen nicht-linearen Zusammenhang zu den Winkeln der Scanelemente. Das liegt vor allem an zumindest einem der folgenden Gründe: 1) Der Abstand zwischen den beiden Scanelementen kann eine geometrische, kissenförmige Verzerrung verursachen. 2) Die Fokussieroptik, z.B. ein F-Theta Objektiv bzw. eine F-Theta Linse, kann eine tonnenförmige optische Verzerrung verursachen. 3) Mechanische Fehlausrichtung zwischen dem Laserstrahl und den Rotationsachsen der Scanelemente, beispielsweise wenn der Laserstrahl auf einen oder beide Scanelemente außerhalb seiner Rotationsachse trifft, und/oder Winkelabweichungen der Scanelemente können ebenfalls zur Nichtlinearität der Abhängigkeit der Fokusposition von der Scannereinstellung beitragen. 4) In Laserbearbeitungssystemen ohne Encoder-Feedback kann der nicht-lineare Zusammenhang zwischen dem Winkel des Scanelements und der an den Galvanometer angelegten Spannung einen systematischen Offset verursachen. In Laserbearbeitungssystemen mit Encoder-Feedback können systematische Fehler des Encoders ebenfalls Verzerrungen verursachen. 5) Zudem können thermische Effekte eine Positionsdrift verursachen.

Für Anwendungen mit geringer Genauigkeit können geometrische und optische Verzerrungen gemäß 1) und 2) mit einer Software zur Lichtstrahlverfolgung ("ray tracing") simuliert werden, um eine Zuordnung zwischen einer Position in einem Weltkoordinatensystem und den Galvanometerwinkeln bzw. einer Scannereinstellung, die für ein Auslenken des Laserstrahls auf diese Position erforderlich sind, d.h. zwischen einem Weltkoordinatensystem und einem Scannerkoordinatensystem, zu bestimmen. In der Realität besteht jedoch eine Diskrepanz zwischen Simulation und tatsächlichen Ergebnissen mit einem Positionierungsfehler von ca. 500 µm und mehr, weshalb diese Lösung für Präzisionsanwendungen ungeeignet ist.

Darüber hinaus treten dieselben Probleme wie für das Positionieren des Laserstrahls auch für die koaxiale Beobachtungsvorrichtung auf, die zumindest teilweise denselben optischen Pfad wie der Laserstrahl aufweist. Es ist allgemein bekannt, dass aufgrund der unterschiedlichen Wellenlängen der Beobachtungsbeleuchtung und des Laserstrahls, d.h. wegen der chromatischen Aberration, beide Teilsysteme, die Scannervorrichtung und die Beobachtungsvorrichtung, separat kalibriert werden müssen. Zusätzlich treten für die Beobachtungsvorrichtung auch perspektivische Verzerrungen auf, wenn das Scanfeld über die Scanelemente unter verschiedenen Winkeln betrachtet wird, und/oder Linsenverzerrungen durch Linsen des optischen Systems der Beobachtungsvorrichtung. Um daher mit der koaxialen Beobachtungsvorrichtung eine Position auf dem Werkstück, z.B. die Fokusposition des Laserstrahls bzw. die Laserposition, zu messen, muss ein nicht-linearer Zusammenhang zwischen dem Pixelkoordinatensystem (auch Bildkoordinatensystem oder Kamerakoordinatensystem genannt) und dem Weltkoordinatensystem (auch Bezugskoordinatensystem oder Kalibrationskoordinatensystem genannt) hergestellt werden. Mit anderen Worten muss für eine vorgegebene Scannereinstellung (z.B. Galvanometerwinkel α und β), ermittelt werden, welche Pixelkoordinaten im Bild der Beobachtungsvorrichtung (bzw. welcher Pixel der Kamera) einer Position x, y im Weltkoordinatensystem entspricht.

Zuletzt bleibt die Frage, was das Weltkoordinatensystem eigentlich ist und wie das Beobachtungssystem, insbesondere die Beobachtungsvorrichtung, und das Lasersystem, insbesondere die Scannervorrichtung, auf dasselbe Weltkoordinatensystem kalibriert werden kann, um beide Systeme miteinander zu synchronisieren. Ungünstigerweise bestehen mehrere Ansätze, um dieses Koordinierungsproblem zu lösen, wodurch ein Vergleich oder eine Bewertung der verschiedenen Lösungen erschwert wird. Aus diesem Grund wird in der vorliegenden Offenbarung die Aufgabenstellung folgendermaßen definiert: 1) Ermitteln einer Zuordnung bzw. einer Funktion zwischen dem (Referenz-)Weltkoordinatensystem und den Galvanometer-Winkeln für den Laserstrahl (d.h. der Scannereinstellung bzw. dem Scannerkoordinatensystem) bzw. zwischen dem (Referenz-)Weltkoordinatensystem und dem Scannerkoordinatensystem, und 2) Ermitteln einer Zuordnung bzw. einer Funktion zwischen dem (Referenz-)Weltkoordinatensystem und dem Pixelkoordinatensystem. Dadurch wird das Problem von Beobachtungs- und Scannerkoordinaten in zwei getrennte Teilprobleme aufgeteilt, um die Ergebnisse unabhängig voneinander zu bewerten, indem die tatsächliche Position des Laserstrahls oder die Messposition im Bild mit einer Referenz verglichen wird.

US 5,430,666 betrifft ein automatisiertes Verfahren und eine Vorrichtung zur Laserscanning-Kalibrierung in einer Lasersintervorrichtung. EP 3 046 747 betrifft ein System und ein Verfahren zum Kalibrieren eines Laserscanning-Systems. In beiden Dokumenten wird ein sogenanntes "mark and measure" Verfahren eingesetzt, bei dem eine Kalibrierplatte bzw. ein Kalibrierblatt mit dem Laserstrahl markiert wird und anschließend mit einer Scannervorrichtung oder einer externen Kamera vermessen wird.

Bei Scanner-Laserbearbeitungssystemen mit koaxialer Beobachtungsvorrichtung, bei der die Beobachtungsvorrichtung beispielsweise zur Positionierung des Laserstrahls einsetzt wird, müssen sowohl die Scannervorrichtung als auch die Beobachtungsvorrichtung kalibriert werden. Wenn zuerst die Scannervorrichtung mit Hilfe eines externen Instruments kalibriert wird, muss die Beobachtungsvorrichtung mit derselben Referenz, z.B. eine Kalibrierplatte, wie für die Kalibrierung der Scannervorrichtung kalibriert werden. Hierfür muss die Kalibrierplatte perfekt auf die Achsen der Scannervorrichtung ausgerichtet und der Arbeitsabstand genau eingestellt werden, was in der Praxis schwierig ist. Schon leichte Abweichungen der Längenreferenz oder im Mustererkennungs-Algorithmus können in systematische Fehler verursachen. Eine weitere Schwierigkeit besteht darin, dass sowohl die Kalibrierung der Scannervorrichtung als auch die Kalibrierung der Beobachtungsvorrichtung während einer Inbetriebnahme des Laserbearbeitungssystems bei einem Kunden vorgenommen wird. Eine Kalibration mittels einer Flachbett-Scannervorrichtung kommt für gewöhnlich aufgrund des hohen Zeitaufwands oder auch in Ermangelung eines geeigneten Instruments nicht infrage.

### Zusammenfassung der Erfindung

Es ist eine Aufgabe der vorliegenden Erfindung, ein Verfahren zum Kalibrieren einer Scannervorrichtung, insbesondere einer xy-Galvoscannervorrichtung, für ein Laserbearbeitungssystem anzugeben, das keine externen Instrumente benötigt, und ein Laserbearbeitungssystem, das eine Scannervorrichtung umfasst und eingerichtet ist, dieses Verfahren durchzuführen.

Es ist insbesondere eine Aufgabe der vorliegenden Erfindung, ein Verfahren zum Kalibrieren einer Scannervorrichtung, insbesondere einer xy-Galvoscannervorrichtung, für ein Laserbearbeitungssystem anzugeben, und ein Laserbearbeitungssystem, das eine Scannervorrichtung umfasst und eingerichtet ist, dieses Verfahren durchzuführen, wobei ein Bezug zwischen einem nichtlinearen Scannerkoordinatensystem bzw. einem nichtlinearen Verhalten der Scannereinstellungen zum Auslenken des Laserstrahls auf einem linearen Referenz- bzw. Weltkoordinatensystem hergestellt wird, insbesondere wenn die Scannervorrichtung nicht oder nicht mit ausreichender Genauigkeit durch den Hersteller kalibriert wurde.

Es ist eine weitere Aufgabe der vorliegenden Erfindung, ein Verfahren zum Kalibrieren einer Scannervorrichtung, insbesondere einer xy-Galvoscannervorrichtung, und zum Kalibrieren einer koaxialen Beobachtungsvorrichtung für ein Laserbearbeitungssystem anzugeben, und ein Laserbearbeitungssystem, das eine Scannervorrichtung und eine koaxiale Beobachtungsvorrichtung umfasst und eingerichtet ist, dieses Verfahren durchzuführen.

Es ist insbesondere eine Aufgabe der vorliegenden Erfindung, ein Verfahren zum Kalibrieren einer Scannervorrichtung, insbesondere einer xy-Galvoscannervorrichtung, und zum Kalibrieren einer koaxialen Beobachtungsvorrichtung für ein Laserbearbeitungssystem anzugeben, und ein Laserbearbeitungssystem, das eine Scannervorrichtung und eine koaxiale Beobachtungsvorrichtung umfasst und eingerichtet ist, dieses Verfahren durchzuführen, wobei eine genaue Synchronisierung bzw. Abstimmung des Beobachtungskoordinatensystems und des Scannerkoordinatensystems bzw. der Scannereinstellungen zum Auslenken des Laserstrahls aufeinander erfolgt.

Zumindest eine dieser Aufgaben wird durch den Gegenstand des unabhängigen Anspruchs gelöst.

Der vorliegenden Erfindung liegt die Idee zugrunde, einen Zusammenhang zwischen einem Weltkoordinatensystem und Scannereinstellungen (z.B. Winkel von Galvanometer-Spiegeln) unter Verwendung einer im Laserbearbeitungssystem enthaltenen koaxialen Beobachtungsvorrichtung zu ermitteln. Eine Verwendung externer Messeinrichtungen entfällt somit. Ferner können die koaxiale Beobachtungsvorrichtung und die Scannervorrichtung auf dieselbe Referenz bzw. bezüglich derselben Kalibrierplatte kalibriert werden, sodass beide Kalibrierungen die gleiche Längenreferenz verwenden. Zudem können beide Kalibrierungen den gleichen Mustererkennungs-Algorithmus verwenden.

Gemäß einem Aspekt der vorliegenden Erfindung umfasst ein Verfahren zum Kalibrieren eines Laserbearbeitungssystems mit einer Scannervorrichtung zum Auslenken eines Laserstrahls auf eine Vielzahl von Positionen auf einer Oberfläche (z.B. eines Werkstücks und/oder einer Kalibrierplatte) und mit einer Beobachtungsvorrichtung, deren Beobachtungsstrahlengang koaxial zum Laserstrahlengang über die Scannervorrichtung verläuft, ein Kalibrieren der Scannervorrichtung mit den Schritten: Erzeugen von Lasermarkierungen auf einer Kalibrierplatte mit einer Vielzahl von vorgegebenen Scannereinstellungen; Aufnehmen jeweils eines Bildes von der Kalibrierplatte und von einem Kalibriermuster, das periodisch angeordnete Musterzellen aufweist, durch die Beobachtungsvorrichtung und Ermitteln einer Markierungsposition zumindest einer der Lasermarkierung auf der Kalibrierplatte bezüglich des Kalibriermusters in jedem Bild (insbesondere bezüglich einer die jeweilige Lasermarkierung enthaltenden Musterzelle); und Ermitteln von Scanner-Kalibrierdaten für jede der vorgegebenen Scannereinstellungen basierend auf den ermittelten Markierungspositionen, um den vorgegebenen Scannereinstellungen jeweils eine Position, insbesondere eine Position des Laserstrahls bei der jeweiligen Scannereinstellung, in Weltkoordinaten zuzuordnen.

Gemäß einem Aspekt der vorliegenden Erfindung umfasst ein Verfahren zum Kalibrieren eines Laserbearbeitungssystems mit einer Scannervorrichtung zum Auslenken eines Laserstrahls auf eine Vielzahl von Positionen auf einer Oberfläche (z.B. eines Werkstücks und/oder einer Kalibrierplatte) und mit einer Beobachtungsvorrichtung, deren Beobachtungsstrahlengang koaxial zum Laserstrahlengang über die Scannervorrichtung verläuft, ein Kalibrieren der Scannervorrichtung mit den Schritten: Erzeugen von Lasermarkierungen auf einer Kalibrierplatte mit einer Vielzahl von vorgegebenen Scannereinstellungen, wobei die Kalibrierplatte ein Kalibriermuster mit periodisch angeordneten Musterzellen aufweist; Aufnehmen jeweils eines Bildes von der Kalibrierplatte mit jeder der vorgegebenen Scannereinstellungen durch die Beobachtungsvorrichtung und Ermitteln einer Markierungsposition der jeweiligen Lasermarkierung auf der Kalibrierplatte bezüglich des Kalibriermusters in jedem Bild (insbesondere bezüglich einer die jeweilige Lasermarkierung enthaltenden Musterzelle); und Ermitteln von Scanner-Kalibrierdaten für jede der vorgegebenen Scannereinstellungen basierend auf den ermittelten Markierungspositionen, um den vorgegebenen Scannereinstellungen jeweils eine Position, insbesondere eine Position des Laserstrahls bei der jeweiligen Scannereinstellung, in Weltkoordinaten zuzuordnen.

Gemäß der vorliegenden Offenbarung wird also ein Kalibrieren einer Scannervorrichtung eines Laserbearbeitungssystems mittels einer koaxialen Beobachtungsvorrichtung des Laserbearbeitungssystems und einer ein Kalibriermuster aufweisenden Kalibrierplatte ohne externe Messinstrumente vorgenommen.

Gemäß einem weiteren Aspekt der vorliegenden Offenbarung umfasst ein Laserbearbeitungssystem zum Bearbeiten eines Werkstücks mittels eines Laserstrahls: eine Scannervorrichtung zum Auslenken des Laserstrahls auf eine Vielzahl von Positionen auf einer Oberfläche; eine Beobachtungsvorrichtung, deren Beobachtungsstrahlengang koaxial zum Laserstrahlengang über die Scannervorrichtung verläuft; und eine Steuerung, die eingerichtet ist, um ein Verfahren zum Kalibrieren des Laserbearbeitungssystems nach einem der in dieser Offenbarung beschriebenen Aspekte und/oder Ausführungsbeispiele durchzuführen.

Das Verfahren zum Kalibrieren eines Laserbearbeitungssystems und/oder das Laserbearbeitungssystem gemäß einem dieser Aspekte kann zumindest eines oder mehrere der folgenden Merkmale umfassen:
Die Scannervorrichtung kann eine xy-Galvanometer Scannervorrichtung mit zumindest einem auslenkbaren Scanelement (etwa einen Scanspiegel), insbesondere mit zwei auslenkbaren Scanelementen, sein. Winkeleinstellungen des zumindest Scanelements können auch als Scannereinstellungen bezeichnet werden. Die Scannereinstellung für eine bestimmte Auslenkung des Laserstrahls kann zweidimensional sein, d.h. zwei Werte umfassen, beispielsweise einen ersten Wert zum Einstellen des ersten Scanelements und einen zweiten Wert zum Einstellen des zweiten Scanelements. Mit anderen Worten kann die Scannervorrichtung eingerichtet sein, den Laserstrahl in zwei voneinander verschiedene (d.h. einen Winkel miteinander bildende) Richtungen auszulenken. Die Scannereinstellung kann eine Auslenkung des Laserstrahls und/oder eine Position des Laserstrahls (Laserposition) auf einer Oberfläche festlegen. Die Scannervorrichtung kann eingerichtet sein, den Laserstrahl innerhalb eines vorgegebenen Scanfelds auszulenken. Als Scanfeld wird also ein Bereich bezeichnet, in den der Laserstrahl mittels der Scannervorrichtung gerichtet werden kann. Das Scanfeld kann eine Größe von ≥100mm x ≥100mm, oder von ≥200mm x ≥200mm, oder von ≥250mm x ≥250mm aufweisen. Das Scanfeld muss nicht quadratisch sein.

Gemäß dem erfindungsgemäßen Verfahren kann jeder der vorgegebenen Scannereinstellungen jeweils eine Position in Weltkoordinaten zugeordnet werden. Die Position in Weltkoordinaten kann eine Position des Laserstrahls bei der jeweiligen Scannereinstellung auf der Oberfläche und/oder auf der Kalibrierplatte sein. Die Position in Weltkoordinaten kann insbesondere eine Position des Laserstrahls sein, die der Laserstrahl auf der Oberfläche und/oder auf der Kalibrierplatte bei einem vorgegebenen (Arbeits)Abstand, d.h. Abstand zur Oberfläche bzw. Kalibrierplatte, mit der jeweiligen Scannereinstellung einnimmt.

Das Weltkoordinatensystem kann bezüglich der Kalibrierplatte und/oder bezüglich des Laserbearbeitungssystems (bzw. einer Komponente davon) definiert sein. Das Kalibriermuster kann das Weltkoordinatensystem definieren.

Die Beobachtungsvorrichtung kann eine Kamera, eine CCD-Kamera, eine GraubildKamera, o.ä. sein. Die Beobachtungsvorrichtung kann eingerichtet sein, ein zweidimensionales Bild von der Kalibrierplatte, insbesondere von dem Kalibriermuster, aufzunehmen. Die Beobachtungsvorrichtung kann ein Bildfeld aufweisen, das kleiner oder gleich dem Scanfeld der Scannervorrichtung ist. In der vorliegenden Offenbarung wird eine Beobachtungsvorrichtung, deren Beobachtungsstrahlengang zumindest abschnittsweise koaxial zum Laserstrahlengang des Laserbearbeitungssystems verläuft, auch als koaxiale Beobachtungsvorrichtung bezeichnet. Der Beobachtungsstrahlengang der Beobachtungsvorrichtung wird, beispielsweise durch einen Strahlteiler, vor der Scannervorrichtung (d.h. in Ausbreitungsrichtung des Laserstrahls vor der Scannervorrichtung) in den Strahlengang des Laserstrahls eingekoppelt. Somit verläuft der Beobachtungsstrahlengang der Beobachtungsvorrichtung über/via die Scannervorrichtung.

Die Kalibrierplatte kann eine Metallplatte oder ein Thermopapier sein bzw. umfassen. Die Kalibrierplatte kann das Kalibriermuster aufweisen, d.h. das Kalibriermuster kann auf der Kalibrierplatte aufgebracht, markiert, eingebrannt o.ä. sein. Die Lasermarkierungen können auf der das Kalibriermuster aufweisenden Kalibrierplatte erzeugt werden. Alternativ kann nach dem Erzeugen der Lasermarkierungen eine transparente Folie auf die Kalibrierplatte gelegt werden, die das Kalibriermuster aufweist. Beispielsweise kann das Kalibriermuster auf der Folie aufgedruckt sein. Die Kalibrierplatte und/oder das Kalibriermuster kann das gesamte Scanfeld abdecken. Die Lasermarkierung kann eine optisch erkennbare Markierung mittels des Laserstrahls, z.B. ein Einbrand o.ä., sein.

Das Kalibriermuster weist eine Vielzahl von periodisch angeordneten Musterzellen auf. Die Musterzellen können einen quadratischen, dreieckigen oder viereckigen Umriss aufweisen. Die einzelnen Musterzellen können identisch zueinander sein. Durch das Kalibriermuster kann ein Weltkoordinatensystem definiert sein. Das Kalibriermuster kann ein Gittermuster oder ein Schachbrettmuster umfassen. Die Musterzellen können also ein Gittermuster oder ein Schachbrettmuster bilden. Ein Schachbrettmuster hat zum einen den Vorteil, dass die Lasermarkierungen zur Kontrastoptimierung auf den schwarzen Musterzellen und/oder auf den weißen Musterzellen erzeugt werden können. Zum anderen kann ein Schachbrettmuster leicht mit hoher Genauigkeit und Zuverlässigkeit erkannt werden. Bei einem Schachbrettmuster kann eine Musterzelle so definiert sein, dass sie zwei diagonal zueinander angeordnete schwarze Felder und zwei diagonal zueinander angeordnete weiße Felder umfasst.

Die Musterzellen sind periodisch, d.h. mit einer vorgegebenen Periode, im Kalibriermuster angeordnet. Mit anderen Worten wird eine Musterzelle periodisch in dem Kalibriermuster wiederholt. Die Musterzellen können in einer ersten Richtung (x- Richtung) mit einer vorgegebenen ersten Periode (bzw. x-Periode) und/oder in einer zweiten Richtung (y- Richtung) mit einer vorgegebenen zweiten Periode (bzw. y-Periode) im Kalibriermuster angeordnet sein. Die Periode des Kalibriermusters und/oder eine Größe der Musterzellen ist vorzugsweise zum einen groß genug, dass die Lasermarkierungen auch mit der unkalibrierten Scannervorrichtung und/oder bei fehlerhafter Ausrichtung der Kalibrierplatte für das gesamte Scanfeld jeweils in einer Musterzelle erzeugt werden können. Zum anderen ist die Größe der Musterzellen vorzugsweise klein genug, dass lokale Nichtlinearitäten und/oder eine optische Verzerrung des Bildfelds der Beobachtungsvorrichtung beim Kalibrieren erfasst werden können, und/oder dass im Bildfeld mehrere Perioden des Kalibriermusters liegen. Beispielsweise kann die Größe jeder Musterzelle 5mm2 betragen.

Die Lasermarkierungen können zeilenweise erzeugt werden. In jeder Musterzelle kann eine Lasermarkierung erzeugt werden. Die Lasermarkierungen können in regelmäßigen Abständen erzeugt werden. Beispielsweise können die Lasermarkierungen in einem Abstand von 10mm, z.B. in einem schwarzen Feld der Musterzelle im Falle eines Schachbrettmusters, erzeugt werden. Die Lasermarkierungen können in einer ersten und/oder in einer zweiten Richtung in regelmäßigen Abständen erzeugt werden, wobei die erste und die zweite Richtung senkrecht aufeinander stehen können.

Eine Musterzelle, die einer Position des Laserstrahls bei einer bestimmten Scannereinstellung entspricht bzw. in der bei einer bestimmten Scannereinstellung eine Lasermarkierung erzeugt werden würde, kann auch als Ziel-Musterzelle bezeichnet werden.

Die den vorgegebenen Scannereinstellungen entsprechenden Musterzellen, d.h. die sogenannten Ziel-Musterzellen, können im gesamten Scanfeld gleichmäßig verteilt sein. Auf diese Weise kann sichergestellt werden, dass das gesamte Scanfeld abgedeckt ist bzw. dass die Kalibrierung für das gesamte Scanfeld erfolgt. Die Lasermarkierungen können mit den vorgegebenen Scannereinstellungen in jeder Musterzelle innerhalb des Scanfelds erzeugt werden. Mit anderen Worten können die vorgegebenen Scannereinstellungen allen Musterzellen innerhalb des Scanfelds entsprechen. In diesem Fall erfolgt die Kalibrierung mit einer besonders hohen Auflösung bzw. Genauigkeit.

Die vorgegebenen Scannereinstellungen können so gewählt sein, dass jede der vorgegebenen Scannereinstellungen einer anderen Musterzelle entspricht. Mit anderen Worten können die vorgegebenen Scannereinstellungen so gewählt sein, dass mit jeder der vorgegebenen Scannereinstellungen in einer anderen Musterzelle eine Lasermarkierung erzeugt wird.

Bei dem Kalibrieren der Scannervorrichtung erfolgt das Erzeugen der Lasermarkierung und das Aufnehmen des Bildes zum Ermitteln der Markierungsposition dieser Lasermarkierung vorzugsweise mit derselben Scannereinstellung. Mit anderen Worten kann das Aufnehmen jeweils eines Bildes von der Kalibrierplatte durch die Beobachtungsvorrichtung mit jeder der vorgegebenen Scannereinstellungen, d.h. mit jeder für das Erzeugen der Lasermarkierungen verwendeten Scannereinstellungen erfolgen. Alternativ kann das Ermitteln von Markierungspositionen von mehreren Lasermarkierungen aber auch gleichzeitig erfolgen, beispielsweise wenn sie gleichzeitig in einem aufgenommenen Bild zu sehen sind.

Das Ermitteln der Markierungsposition der jeweiligen Lasermarkierung auf der Kalibrierplatte kann bezüglich der Musterzelle erfolgen, in der sich die jeweilige Lasermarkierung befindet, insbesondere bezüglich eines Mustermerkmals der Musterzelle, etwa bezüglich zumindest einer Ecke, zumindest einer Kante und/oder eines Mittelpunkts der Musterzelle. Zum Ermitteln der Markierungsposition im Bild kann insbesondere eine Pixelposition der Lasermarkierung mit einer Pixelposition zumindest eines Mustermerkmals einer Musterzelle, in der sich die Lasermarkierung befindet, verglichen werden, um für die jeweilige Scannereinstellung eine Markierungsposition in Weltkoordinaten und/oder einen relativen Versatz der Markierungsposition zur Sollposition zu berechnen. Das zumindest eine Mustermerkmal der Musterzelle zum Ermitteln der Markierungsposition kann zumindest eine Kante, zumindest eine Ecke, und/oder einen Mittelpunkt der Musterzelle umfassen.

Die Scanner-Kalibrierdaten können auf den ermittelten Markierungspositionen und den jeweiligen Scannereinstellungen basieren. Die Scanner-Kalibrierdaten können eine Korrekturtabelle bzw. eine Nachschlagetabelle umfassen, worin Positionen in Weltkoordinaten bzw. Positionen des Laserstrahls in Weltkoordinaten und die zugehörigen Scannereinstellungen gelistet sind. Mit anderen Worten können die Scanner-Kalibrierdaten eine Liste von Markierungspositionen in Weltkoordinaten und den jeweiligen Scannereinstellungen umfassen. Die Scanner-Kalibrierdaten können eine Korrekturdatei aus Parametern eines mathematischen Modells umfassen, das den Zusammenhang zwischen Positionen im Weltkoordinatensystem und den entsprechenden Scannereinstellungen beschreibt. Durch die Scanner-Kalibrierdaten kann eine Position des Laserstrahls in Weltkoordinaten für eine bestimmte Scannereinstellung ermittelt werden. Die Scanner-Kalibrierdaten können zusätzlich oder alternativ eine Liste von Offset-Vektoren in Weltkoordinaten und den jeweiligen Scannereinstellungen umfassen, wobei die Offset-Vektoren jeweils einen Offset zwischen der ermittelten Markierungsposition und einer der jeweiligen Scannereinstellung entsprechenden theoretischen Position der Lasermarkierung angeben.

Beim Kalibrieren der Scannervorrichtung können in einem ersten Schritt die Lasermarkierungen mit allen vorgegebenen Scannereinstellungen erzeugt werden, und in einem zweiten Schritt alle Bilder mit allen vorgegebenen Scannereinstellungen aufgenommen werden. Die Scannereinstellungen für das Erzeugen der Lasermarkierungen und die Scannereinstellungen für das Aufnehmen der Bilder zum Ermitteln der Markierungspositionen sind vorzugsweise identisch. Alternativ kann mit jeder der vorgegebenen Scannereinstellungen in einem ersten Schritt eine Lasermarkierung erzeugt und in einem zweiten Schritt ein Bild aufgenommen werden, und diese beiden Schritte für alle vorgegebenen Scannereinstellungen wiederholt werden. Mit anderen Worten kann mit einer der vorgegebenen Scannereinstellungen eine Lasermarkierung erzeugt und ein Bild aufgenommen werden, und anschließend mit einer weiteren der vorgegebenen Scannereinstellungen eine weitere Lasermarkierung erzeugt und ein weiteres Bild aufgenommen werden, bis für alle vorgegebenen Scannereinstellungen eine Lasermarkierung erzeugt und ein Bild aufgenommen ist.

Das Kalibrieren der Scannervorrichtung kann ferner ein Verifizieren der Scanner-Kalibrierdaten umfassen. Das Verifizieren der Scanner-Kalibrierdaten kann folgende Schritte umfassen: Erzeugen einer Verifizierungs-Lasermarkierung auf der Kalibrierplatte mit einer basierend auf den Scanner-Kalibrierdaten korrigierten Scannereinstellung, die einer vorgegebenen Position (z.B. in Weltkoordinaten und/oder bezüglich der Ziel-Musterzelle) in einer Ziel-Musterzelle entspricht; Aufnehmen eines Bildes von der Kalibrierplatte mit der korrigierten Scannereinstellung durch die Beobachtungsvorrichtung und Ermitteln einer Markierungsposition der Verifizierungs-Lasermarkierung auf der Kalibrierplatte (z.B. in Weltkoordinaten und/oder bezüglich der Ziel-Musterzelle); und Vergleichen der ermittelten Markierungsposition mit der vorgegebenen Position. Beispielsweise kann die vorgegebene Position in der Ziel-Musterzelle der Mittelpunkt der Ziel-Musterzelle sein. In dem aufgenommenen Bild kann überprüft werden, ob die Markierungsposition der Verifizierungs-Lasermarkierung dem Mittelpunkt der Ziel-Musterzelle entspricht. Die Schritte für das Verifizieren der Scanner-Kalibrierdaten können jeweils für eine Vielzahl von Ziel-Musterzellen durchgeführt werden. Ziel-Musterzelle kann hier eine Musterzelle des Kalibriermusters bezeichnen, in sich die vorgegebene Position befindet. Mit anderen Worten kann zum Verifizieren der Scanner-Kalibrierung jeweils eine Position für eine von der Vielzahl von Ziel-Musterzellen in Weltkoordinaten vorgegeben werden. Basierend auf den Scanner-Kalibrierdaten kann für jede dieser Positionen eine korrigierte Scannereinstellung ermittelt werden, um eine Verifizierungs-Lasermarkierung auf der Kalibrierplatte mit dieser korrigierten Scannereinstellung zu erzeugen. Anschließend kann mit jeder dieser korrigierten Scannereinstellungen ein Bild mittels der Beobachtungsvorrichtung aufgenommen und eine Markierungsposition der Verifizierungs-Lasermarkierung in Weltkoordinaten und/oder bezüglich der Ziel-Musterzelle ermittelt werden. Die ermittelte Markierungsposition der Verifizierungs-Lasermarkierung kann mit der vorgegebenen Position verglichen werden. Stimmen beide Positionen überein, können die Scanner-Kalibrierdaten als verifiziert gelten. Auch hier kann das Erzeugen der Verifizierungs-Lasermarkierung und das Aufnehmen des Bildes zum Ermitteln der Markierungsposition mit derselben korrigierten Scannereinstellung erfolgen. Die vorgegebene Position in der Ziel-Musterzelle kann einem Merkmal der Ziel-Musterzelle entsprechen, z.B. dem Mittelpunkt, einer Ecke, etc.. Die vorgegebene Position kann für jede Ziel-Musterzelle gleich sein.

Das Verfahren zum Kalibrieren des Laserbearbeitungssystems kann ferner ein Kalibrieren der Beobachtungsvorrichtung umfassen, mit den Schritten: Ermitteln einer Position eines Merkmals einer ersten Ziel-Musterzelle in einem ersten Bild von der Kalibrierplatte (z.B. in Pixelkoordinaten), aufgenommen mit einer ersten Scannereinstellung entsprechend der ersten Ziel-Musterzelle, und Ermitteln einer Position eines (vorzugsweise entsprechenden) Merkmals einer zweiten Ziel-Musterzelle in einem zweiten Bild von der Kalibrierplatte (z.B. in Pixelkoordinaten), aufgenommen mit einer zweiten bezüglich der ersten Scannereinstellung verschobenen Scannereinstellung entsprechend der zweiten Ziel-Musterzelle, jeweils für eine Vielzahl von ersten und zweiten Scannereinstellungen; Ermitteln einer Merkmalsverschiebung (z.B. in Pixelkoordinaten) durch Vergleichen der Position des Merkmals der ersten Ziel-Musterzelle im ersten Bild mit einer Position des (vorzugsweise entsprechenden) Merkmals der zweiten Ziel-Musterzelle im zweiten Bild unter Berücksichtigung der Verschiebung zwischen der ersten und zweiten Scannereinstellung und einer Periode des Kalibriermusters, jeweils für die Vielzahl von ersten und zweiten Scannereinstellungen; und Ermitteln von Bild-Kalibrierdaten zur Korrektur der chromatischen Aberration für jede der ersten Scannereinstellungen basierend auf den ermittelten Merkmalsverschiebungen.

Auf diese Weise kann sichergestellt werden, dass die Beobachtungsvorrichtung und die Scannervorrichtung bezogen auf dasselbe Bezugssystem, d.h. auf das Weltkoordinatensystem der Kalibrierplatte, kalibriert werden. Zudem kann beim Kalibrieren der Beobachtungsvorrichtung dieselbe Kalibrierplatte und/oder derselbe Mustererkennungsalgorithmus zum Erkennen von Merkmalen des Kalibriermusters, d.h. von Merkmalen der Musterzellen, wie beim Kalibrieren der Scannervorrichtung verwendet werden. Nach Korrektur der chromatischen Aberration sollte die Ziel-Musterzelle im Mittelpunkt des entsprechenden Bildes (d.h. des bei der der Ziel-Musterzelle entsprechenden Scannereinstellung aufgenommenen Bildes) sein. Aufgrund chromatischer Aberration kann eine Verschiebung der Musterzellen in Pixelkoordinaten abhängig von den Scannereinstellungen auftreten. Hier ist festzuhalten, dass optische Elemente eines Laserbearbeitungssystems in der Regel für die Wellenlänge des Laserstrahls optimiert sind, sodass für sichtbares Licht optische Fehler auftreten.

Mit anderen Worten kann im Bild eine Position in Weltkoordinaten abhängig von der Scannereinstellung bei Aufnahme des Bildes verschoben sein. Somit kann eine Kalibrierung der Beobachtungsvorrichtung zur Korrektur der chromatischen Aberration notwendig sein, um eine Position in Pixelkoordinaten (d.h. eine Position im Bild) einer Position in Weltkoordinaten (d.h. einer Position auf der Kalibrierplatte bzw. auf der Oberfläche) zuzuordnen. Eine Position in Pixelkoordinaten kann auch als Pixelposition bezeichnet werden.

Das Kalibrieren der Beobachtungsvorrichtung kann also ohne Einstrahlen des Laserstrahls erfolgen. Beim Kalibrieren der Beobachtungsvorrichtung können jeweils zwei Bilder, die mit verschiedenen Scannereinstellungen von der Beobachtungsvorrichtung aufgenommen wurden, verglichen werden.

Eine Scannereinstellung entsprechend einer Ziel-Musterzelle kann hingegen eine Scannereinstellung bezeichnen, bei der sich der Laserstrahl in dieser Musterzelle befinden würde. Ein Merkmal der ersten bzw. zweiten Ziel-Musterzelle kann ein Mustermerkmal sein, z.B. eine Kante, eine Ecke, ein Mittelpunkt der ersten bzw. zweiten Ziel-Musterzelle, und/oder eine Lasermarkierung in der Ziel-Musterzelle, insbesondere eine Verifizierungs-Lasermarkierung. Das Merkmal der ersten Ziel-Musterzelle kann dem Merkmal der zweiten Ziel-Musterzelle entsprechen, d.h. es kann sich bei den Merkmalen jeweils um eine bestimmte Ecke der Ziel-Musterzelle bzw. jeweils um den Mittelpunkt handeln.

Das Ermitteln der Position des Merkmals der Ziel-Musterzelle im Bild kann eine Position in Pixelkoordinaten ergeben. Ebenso kann die Merkmalsverschiebung in Pixelkoordinaten angegeben werden. Wenn die Merkmale der ersten und zweiten Ziel-Musterzelle einander entsprechen und die Verschiebung zwischen der ersten und zweiten Scannereinstellung einem ganzzahligen Vielfachen der Periode des Kalibriermusters entspricht, sollten die Positionen der Merkmale in dem ersten und zweiten Bild identisch sein, d.h. keine Merkmalsverschiebung vorliegen bzw. die Merkmalsverschiebung null sein.

Die zweite Scannereinstellung kann bezüglich der ersten Scannereinstellung um mindestens eine Periode des Kalibriermusters verschoben sein. Mit anderen Worten kann die Verschiebung zwischen der ersten und zweiten Scannereinstellung einer Verschiebung um mindestens eine Periode des Kalibriermusters entsprechen. Vorzugsweise sind die erste Ziel-Musterzelle und die zweite Ziel-Musterzelle aufeinanderfolgende Musterzellen des Kalibriermusters. Die erste Ziel-Musterzelle und die zweite Ziel-Musterzelle können also aneinander angrenzen bzw. unmittelbar benachbart sein.

Die erste Scannereinstellung und die zweite Scannereinstellung bzw. die erste Ziel-Musterzelle und die zweite Ziel-Musterzelle bzw. das erste Bild und das zweite Bild können jeweils als Vergleichspaar von Scannereinstellungen bzw. Ziel-Musterzellen bzw. Bildern für das Ermitteln der Merkmalsverschiebung bezeichnet werden. Das Ermitteln der Merkmalsverschiebung kann für eine Vielzahl von Vergleichspaaren durchgeführt werden. Die ersten Scannereinstellungen von der Vielzahl von ersten Scannereinstellungen können, z.B. zeilenweise, von einer Ziel-Musterzelle zur nächsten Ziel-Musterzelle verschoben werden.

Die ersten Scannereinstellungen und die zweiten Scannereinstellungen können in den vorgegebenen Scannereinstellungen zum Kalibrieren der Scannervorrichtung enthalten sein. In diesem Fall können die ersten und zweiten Bilder Bilder sein, die für das Kalibrieren der Scannervorrichtung, insbesondere für das Ermitteln von Markierungspositionen der Lasermarkierungen, aufgenommen worden sind. Die ersten und zweiten Bilder können auch Bilder sein, die für das Verifizieren der Scanner-Kalibrierdaten aufgenommen worden sind. Hier können als Merkmale der ersten und zweiten Ziel-Musterzellen dann vorzugsweise Mittelpunkte der Ziel-Musterzellen verwendet werden. Die Merkmalsverschiebung kann mit einem Verschiebungsvektor in Pixelkoordinaten definiert sein. Die Merkmalsverschiebung kann als eine Abweichung der Position des Merkmals der zweiten Ziel-Musterzelle im zweiten Bild von einer theoretischen Position des Merkmals der zweiten Ziel-Musterzelle, die basierend auf der Verschiebung zwischen der ersten und zweiten Scannereinstellung und einer Periode des Kalibriermusters zu erwarten ist, definiert sein.

Basierend auf den für die Vielzahl von ersten und zweiten Scannereinstellungen (bzw. für die Vielzahl von Vergleichspaaren von Scannereinstellungen) ermittelten Merkmalsverschiebungen können Bild-Kalibrierdaten zur Korrektur der chromatischen Aberration für jede der ersten und/oder zweiten Scannereinstellungen ermittelt werden. Die Bild-Kalibrierdaten können auf den ermittelten Merkmalsverschiebungen und den jeweiligen Scannereinstellungen basieren. Die Bild-Kalibrierdaten können also für jede Scannereinstellung eine entsprechende Pixelposition angeben, die bei dieser Scannereinstellung einer Position des Laserstrahls und/oder eine Position eines Merkmals (z.B. des Mittelpunkts) der Ziel-Musterzelle im Bild entspricht. Die Bild-Kalibrierdaten können eine Liste von Scannereinstellungen und entsprechenden Pixelpositionen umfassen. Die Bild-Kalibrierdaten können eine Korrekturtabelle bzw. eine Nachschlagetabelle umfassen, worin für die jeweiligen Scannereinstellungen Positionen in Weltkoordinaten bzw. Positionen des Laserstrahls in Weltkoordinaten entsprechende Pixelpositionen in den bei den jeweiligen Scannereinstellungen aufgenommenen Bildern zugeordnet sind. Durch die Bild-Kalibrierdaten kann eine Position des Laserstrahls in einem Bild, d.h. eine Pixelposition des Laserstrahls in Pixelkoordinaten, für eine bestimmte Scannereinstellung einer Position des Laserstrahls in Weltkoordinaten zugeordnet werden. Dadurch wird eine fehlerfreie Prozessbeobachtung und/oder Prozessführung möglich.

Die Bild-Kalibrierdaten zur Korrektur der chromatischen Aberration können eine Liste von den Scannereinstellungen entsprechenden Positionen in Weltkoordinaten und von den für die ersten Scannereinstellungen ermittelten Merkmalsverschiebungen in Pixelkoordinaten umfassen.

Die Bild-Kalibrierdaten zur Korrektur der chromatischen Aberration können eine Liste von Verschiebungsvektoren in Pixelkoordinaten und jeweiligen, den Scannereinstellungen entsprechenden Positionen in Weltkoordinaten umfassen. Die Verschiebungsvektoren können jeweils eine Abweichung der Position des Merkmals der zweiten Ziel-Musterzelle im zweiten Bild von einer theoretischen Position des Merkmals der zweiten Ziel-Musterzelle, die basierend auf der Verschiebung zwischen der ersten und zweiten Scannereinstellung und einer Periode des Kalibriermusters zu erwarten ist, angeben.

Das Merkmal zum Ermitteln der Markierungsposition beim Kalibrieren der Scannervorrichtung kann gleich oder anders als das Merkmal zum Ermitteln der Merkmalsverschiebung beim Kalibrieren der Beobachtungsvorrichtung sein.

Das Kalibrieren der Beobachtungsvorrichtung kann jeweils für die Vielzahl von ersten und zweiten Scannereinstellungen umfassen: Aufnehmen des ersten Bildes von der Kalibrierplatte mit der ersten Scannereinstellung entsprechend der ersten Ziel-Musterzelle und Aufnehmen des zweiten Bildes von der Kalibrierplatte mit der zweiten bezüglich der ersten Scannereinstellung verschobenen Scannereinstellung entsprechend der zweiten Ziel-Musterzelle, wobei die erste und zweite Scannereinstellung basierend auf den Scanner-Kalibrierdaten korrigiert sind. Alternativ kann die Vielzahl von ersten und zweiten Scannereinstellungen in der Vielzahl von vorgegebenen Scannereinstellungen für das Kalibrieren der Scannervorrichtung enthalten sein, und/oder das erste und zweite Bild jeweils ein für das Kalibrieren der Scannervorrichtung aufgenommenes Bild mit der entsprechenden Scannereinstellung sein. Beim Ermitteln der Merkmalsverschiebung können dann zusätzlich die Scanner-Kalibrierdaten berücksichtigt werden.

Das Kalibrieren der Beobachtungsvorrichtung kann ferner eine Bildverzerrungskorrektur umfassen. Die Bildverzerrungskorrektur kann für einige oder alle der ersten und/oder zweiten Bilder jeweils folgende Schritte umfassen: Korrigieren des Bildes basierend auf den Bild-Kalibrierdaten zur Korrektur der chromatischen Aberration entsprechend der Scannereinstellung bei Aufnahme des Bildes; Ermitteln von Pixelpositionen von jeweils zumindest einem Merkmal von mehreren (oder allen) Musterzellen in dem korrigierten Bild; und Erstellen eines Modells zur Bildverzerrungskorrektur basierend auf einem Vergleich von Pixelabständen zwischen den ermittelten Pixelpositionen und entsprechenden Abständen der jeweiligen Merkmale auf der Kalibrierplatte in Weltkoordinaten für die jeweilige Scannereinstellung bei Aufnahme des Bildes. Beispielsweise können bei einem Schachbrettmuster als Kalibriermuster die Pixelpositionen aller Ecken in dem Bild ermittelt werden, und darauf basierend sowie basierend auf dem bekannten Eckenabstand im Weltkoordinatensystem (d.h. auf der Kalibrierplatte) ein Modell zur Bildverzerrungskorrektur erstellt werden.

Die Steuerung des Laserbearbeitungssystems kann eingerichtet sein, die Scannervorrichtung und/oder die Beobachtungsvorrichtung zu steuern. Die Steuerung des Laserbearbeitungssystems kann eingerichtet sein, eine Bildanalyse an den von der Beobachtungsvorrichtung aufgenommenen Bildern durchzuführen, z.B. durch Anwendung eines Mustererkennungs-Algorithmus.

Das Laserbearbeitungssystem kann ferner eine Fokussieroptik, insbesondere ein F-Theta Objektiv oder F-Theta Linse, zum Fokussieren des Laserstrahls aufweisen. Die Fokussieroptik kann (in Bezug auf die Strahlausbreitungsrichtung des Laserstrahls) nach der Scannervorrichtung angeordnet sein.

Das Laserbearbeitungssystem kann ein Laserbearbeitungssystem zum Durchführen eines Bearbeitungsprozesses, insbesondere zum Laserschneiden, Laserschweißen, Laserlöten, Laserbohren etc., an dem Werkstück mittels des Laserstrahls sein.

Das Werkstück kann insbesondere ein metallisches Werkstück sein. Das Laserbearbeitungssystem kann zur Bearbeitung eines metallischen Werkstücks eingerichtet sein.

### Kurzbeschreibung der Figuren

Ausführungsbeispiele der Offenbarung sind in den Figuren dargestellt und werden im Folgenden näher beschrieben. Es zeigen:
Figur 1 ist eine schematische Darstellung eines Laserbearbeitungssystems zum Laserbearbeiten eines Werkstücks mittels eines Laserstrahls gemäß Ausführungsformen der Erfindung;
Figur 2 zeigt eine schematische Darstellung der verschiedenen, miteinander zu synchronisierenden Koordinatensysteme eines Laserbearbeitungssystems gemäß Ausführungsformen der Erfindung;
Figuren 3A und 3B zeigen Ausführungsbeispiele eines Kalibriermusters einer Kalibrierplatte gemäß Ausführungsformen der Erfindung;
Figuren 4A und 4B zeigen Ablaufdiagramme je eines Verfahrens zum Kalibrieren der Scannervorrichtung gemäß Ausführungsformen der Erfindung;
Figuren 5A und 5B zeigen Ablaufdiagramme einer Verifizierung der Kalibration der Scannervorrichtung gemäß Ausführungsformen der Erfindung;
Figur 6 zeigt ein Ablaufdiagramm eines Verfahrens zum Kalibrieren der koaxialen Beobachtungsvorrichtung zur Korrektur der chromatischen Aberration gemäß Ausführungsformen der Erfindung

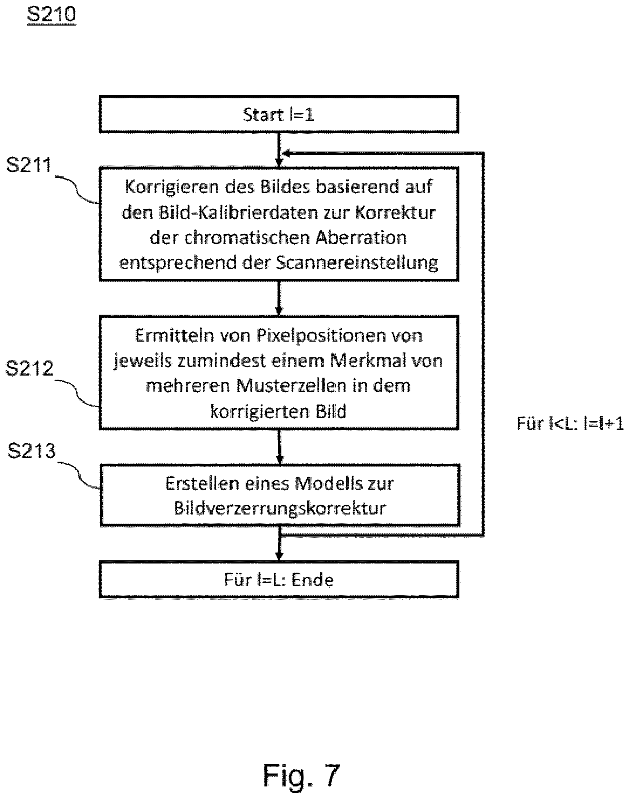

Figur 7 zeigt ein Ablaufdiagramm eines Verfahrens zum Kalibrieren der koaxialen Beobachtungsvorrichtung zur Bildverzerrungskorrektur gemäß Ausführungsformen der Erfindung; und
Figur 8 zeigt ein Ablaufdiagramm eines Verfahrens zum Kalibrieren der Scannervorrichtung und zum Kalibrieren der koaxialen Beobachtungsvorrichtung gemäß Ausführungsformen der Erfindung.

### Ausführliche Beschreibung der Figuren

Im Folgenden werden, sofern nicht anders vermerkt, für gleiche und gleichwirkende Elemente dieselben Bezugszeichen verwendet.

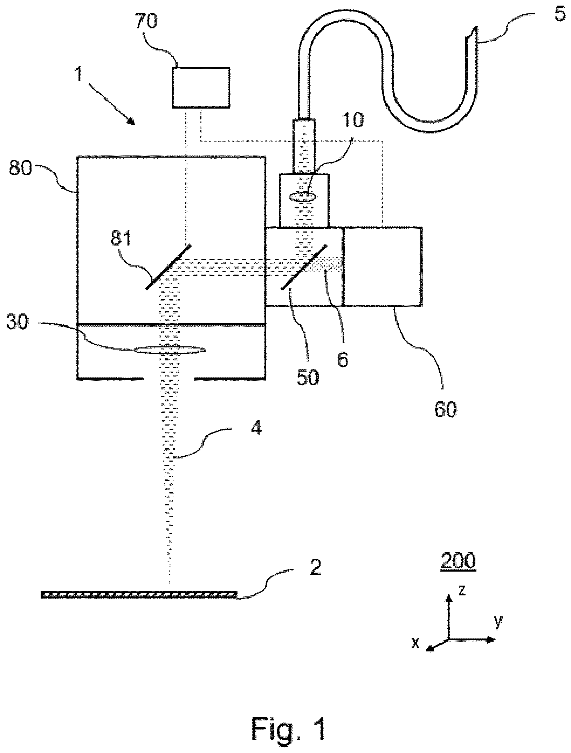

Fig. 1 zeigt eine schematische Darstellung eines Laserbearbeitungssystems 1 gemäß Ausführungsformen der vorliegenden Offenbarung.

Das Laserbearbeitungssystem 1 umfasst eine Scannervorrichtung 80 mit einem oder zwei Scanelementen 81 zum Auslenken des Laserstrahls 4 auf eine Vielzahl von Positionen auf einer Oberfläche 2, beispielsweise eines zu bearbeitenden Werkstücks, und eine Beobachtungsvorrichtung 60, deren Beobachtungsstrahlengang 6 zumindest teilweise koaxial zum Strahlengang des Laserstrahls 4 verläuft. Die Beobachtungsvorrichtung 60 kann eine Kamera sein oder umfassen, insbesondere eine Graubildkamera oder eine CCD-Kamera. Der Laserstrahlengang 4 und der Beobachtungsstrahlengang 6 können mittels eines Strahlkoppelelements 50, wie mittels eines Strahlkombinierers, eines dichroitischen Spiegels, etc., gekoppelt werden. Das Koppeln der beiden Strahlengänge 4 und 6 erfolgt vor der Scannervorrichtung 80 (in Strahlausbreitungsrichtung des Laserstrahls 4) bzw. zwischen Scannervorrichtung 80 und Beobachtungsvorrichtung 60. Somit verlaufen sowohl der Laserstrahlengang 4 als auch der Beobachtungsstrahlengang 6 über die Scannervorrichtung 80. Das Bildfeld der Beobachtungsvorrichtung 60 wird somit entsprechend einer Scannereinstellung, d.h. einer Einstellung des zumindest einen Scanelements 81, auf der Oberfläche ausgerichtet bzw. ausgelenkt. Das Bildfeld der Beobachtungsvorrichtung 60 enthält einen Auftreffpunkt des Laserstrahls 4 auf der Oberfläche 2.

Das Laserbearbeitungssystem 1 umfasst ferner eine Steuerung 70. Die Steuerung 70 kann eingerichtet sein, um die Scannervorrichtung 80 zu steuern, insbesondere basierend auf einer Scannereinstellung zum Positionieren des Laserstrahls 4 für die Laserbearbeitung, und/oder um die Beobachtungsvorrichtung 60 zum Erfassen bzw. Aufnehmen eines Bildes zu steuern. Die Steuerung 70 kann ferner zum Empfangen eines von der Beobachtungsvorrichtung 60 aufgenommenen Bildes von der Oberfläche 2 eingerichtet sein. Die Steuerung 70 kann eingerichtet sein, um eine Laserquelle zum Einstrahlen des Laserstrahls 4 zu steuern.

Die Scannervorrichtung 80 kann ein 1D- oder 2D-Galvanometer-Scanner sein. Die Scannervorrichtung 80 kann genau ein Scanelement 81, z.B. einen Scanspiegel, umfassen, das um eine Achse drehbar bzw. schwenkbar ist, um den Laserstrahl 4 auf der Oberfläche 2 auszulenken. Das Scanelement kann auch um zwei voneinander verschiedene Achsen drehbar bzw. schwenkbar sein, um den Laserstrahl 4 in zwei verschiedenen Richtungen, beispielsweise in zwei orthogonalen Richtungen x und y, auf der Oberfläche 2 auszulenken. Auch wenn es in Fig. 1 nicht dargestellt ist, umfasst die Scannervorrichtung 80 vorzugsweise zwei Scanelemente 81 bzw. Scanspiegel, die jeweils um eine Achse drehbar bzw. schwenkbar sind, um den Laserstrahl 4 in zwei verschiedenen Richtungen, beispielsweise in zwei orthogonalen Richtungen x und y, auf der Oberfläche 2 auszulenken. Die Steuerung 70 kann eingerichtet sein, die Scannervorrichtung 80 gemäß einer Scannereinstellung, beispielsweise einem Winkelpaar (α, β), einzustellen. Die Scannereinstellung kann als Position in einem Scannerkoordinatensystem betrachtet werden.

Das Laserbearbeitungssystem 1 kann ferner eine Kollimationsoptik 10 zum Kollimieren des divergent in das Laserbearbeitungssystem 1 eintretenden Laserstrahls 4 sowie eine Fokussieroptik 30, beispielsweise ein F-Theta-Objektiv, zum Fokussieren des Laserstrahls 4 in Bezug auf die Oberfläche 2 aufweisen. Insbesondere kann der von einer Laserlichtquelle oder einem Ende einer Laserleitfaser 5 austretende Laserstrahl 4 mit Hilfe der Kollimationsoptik 10 und der Fokussieroptik 30 auf einer Oberfläche eines zu bearbeitenden Werkstücks 2 fokussiert oder gebündelt werden, um dadurch eine Bearbeitung oder einen Bearbeitungsprozess auszuführen. Die Bearbeitung kann beispielsweise ein Laserschneiden, -löten, -schweißen oder -bohren umfassen.

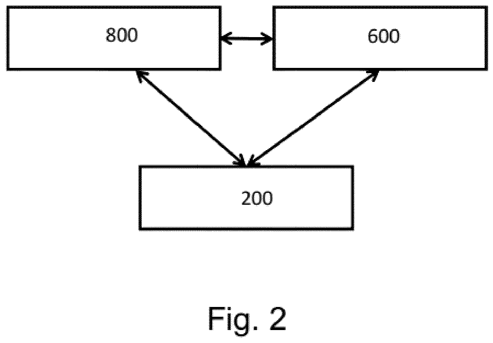

Bei einem Laserbearbeitungssystem 1 mit einer Scannervorrichtung 80 und einer koaxial montierten Beobachtungsvorrichtung 60 sind die Position des Laserstrahls 4 und die Scannereinstellung nicht-linear miteinander korreliert. Daher ist ein Kalibrieren der Scannervorrichtung 80 bzw. ein Synchronisieren eines Scannerkoordinatensystems 800 mit einem Weltkoordinatensystem 200, d.h. mit den Raumkoordinaten x, y, z des Bearbeitungsbereichs erforderlich. Ebenso sind ein Pixelkoordinatensystem der Beobachtungsvorrichtung 60 mit Weltkoordinaten der Oberfläche 2 bzw. eines Bearbeitungsbereichs, nicht-linear miteinander korreliert. Um jedoch die Beobachtungsvorrichtung 60 auch zur Positionierung des Laserstrahls 4 zu verwenden, müssen sowohl die Scannervorrichtung 80 als auch die Beobachtungsvorrichtung 60 kalibriert werden. Vorzugsweise wird daher, wie in Fig. 2 gezeigt, ein Scannerkoordinatensystem 800 und ein Pixelkoordinatensystem 600 der Beobachtungsvorrichtung 60 mit einem Weltkoordinatensystem 200, d.h. mit den Raumkoordinaten x, y, z des Bearbeitungsbereichs, synchronisiert.

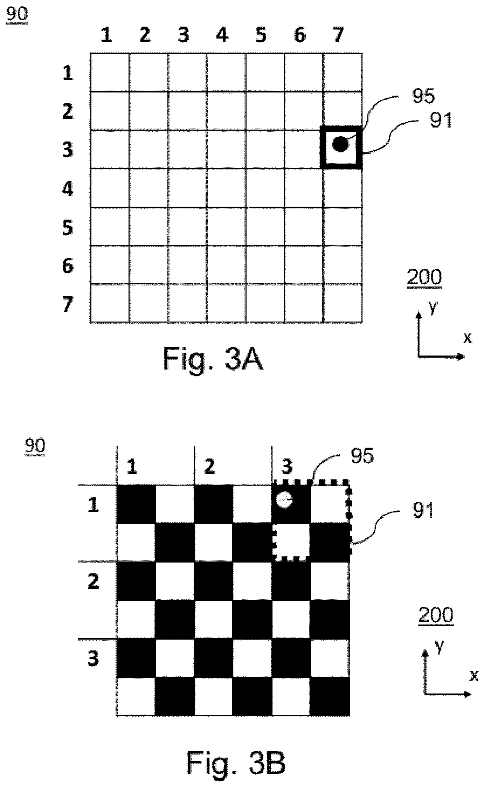

Gemäß der vorliegenden Erfindung wird ein Verfahren zum Kalibrieren der Scannervorrichtung 80 vorgeschlagen, mittels einer ein Kalibriermuster aufweisenden Kalibrierplatte 90 und der koaxialen Beobachtungsvorrichtung 60. In Figuren 3A und 3B sind Beispiele für eine Kalibrierplatte 90 mit verschiedenen Kalibriermustern gezeigt. Das Kalibriermuster kann aus periodisch angeordneten Musterzellen 91 (in Fig. 3A und 3B aus Darstellungsgründen hervorgehoben) bestehen. Das Kalibriermuster kann bezüglich des Weltkoordinatensystems 200 definiert sein bzw. das Weltkoordinatensystem 200 definieren. Das Kalibriermuster kann beispielsweise ein Gitter sein, wie in Fig. 3A gezeigt, oder ein Schachbrettmuster wie in Fig. 3B gezeigt. Bei einem Schachbrettmuster kann eine Musterzelle 91 aus je zwei diagonal angeordneten schwarzen und weißen Feldern bestehen. Um einen Bildkontrast zu optimieren, kann entweder auf den schwarzen Feldern oder auf den weißen Feldern des Kalibriermusters eine Lasermarkierung 95 erzeugt werden.

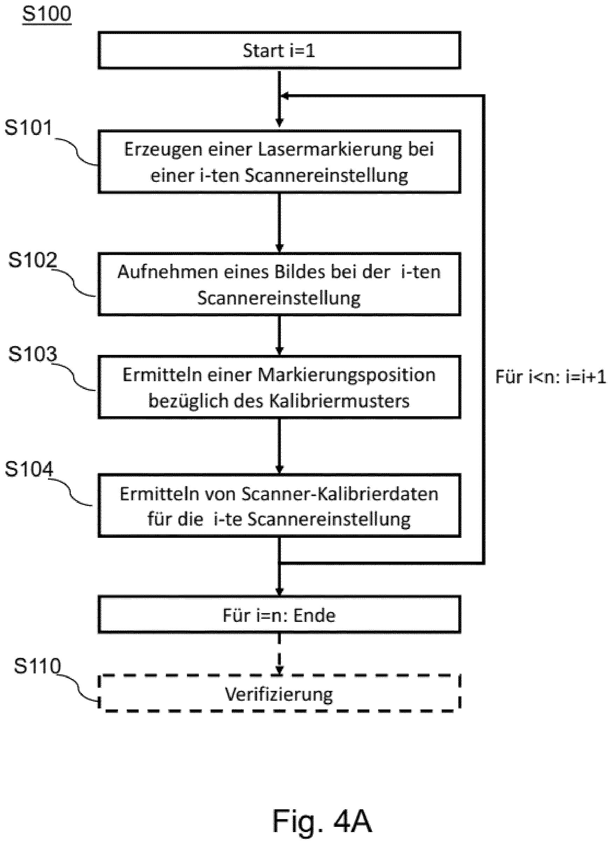

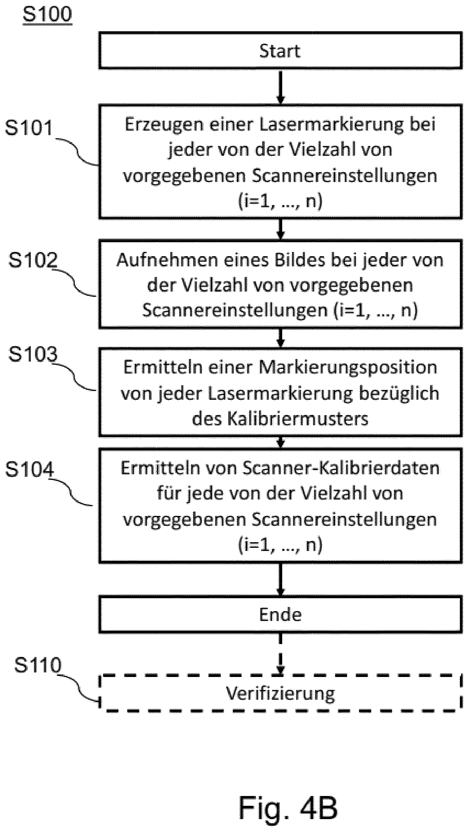

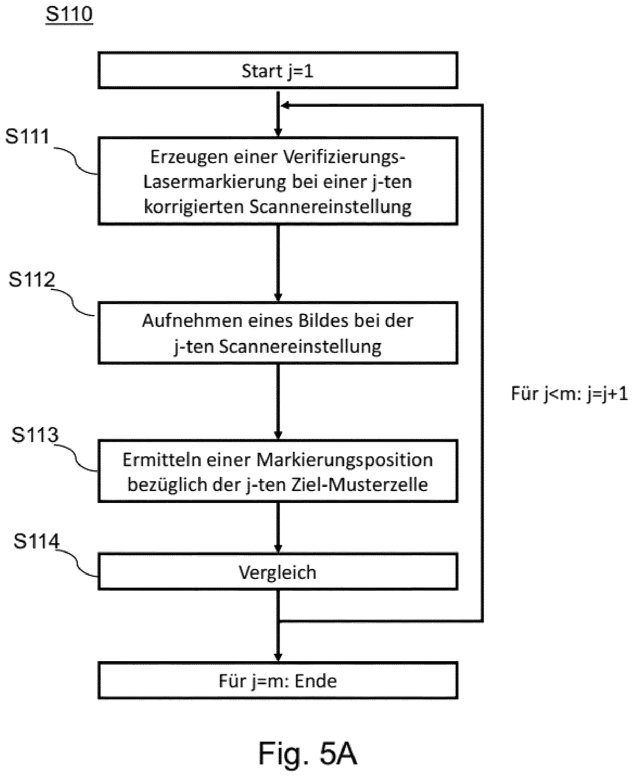

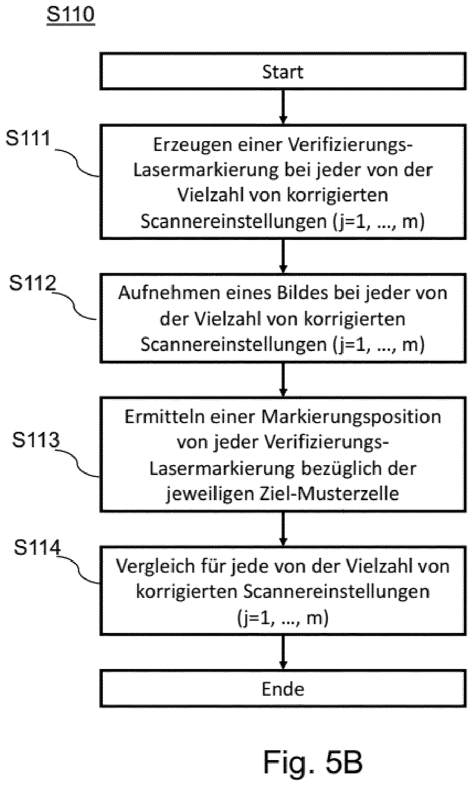

In Figuren 4A und 4B sind Ablaufdiagramme je eines Verfahrens S 100 zum Kalibrieren der Scannervorrichtung 80 gemäß Ausführungsformen der vorliegenden Erfindung dargestellt. Gemäß der vorliegenden Erfindung werden zunächst Lasermarkierungen 95 auf der Kalibrierplatte 90 mit einer Vielzahl von vorgegebenen Scannereinstellungen erzeugt (S101). Die vorgegebenen Scannereinstellungen können einigen oder allen Musterzellen 91 entsprechen, sodass in einigen oder allen Musterzellen 91 je eine Lasermarkierung 95 erzeugt wird. Vorzugsweise wird bei jeder dieser vorgegebenen Scannereinstellungen ein Bild von der Kalibrierplatte 90 durch die Beobachtungsvorrichtung 60 aufgenommen (S102), und in dem Bild wird eine Markierungsposition der jeweiligen Lasermarkierung 95, d.h. die Lasermarkierung 95, die mit dieser Scannereinstellung erzeugt wurde, auf der Kalibrierplatte 90 bezüglich des Kalibriermusters bestimmt (S103). Alternativ kann auch ein Bild von der Kalibrierplatte 90 durch die Beobachtungsvorrichtung 60 aufgenommen werden, um Markierungspositionen von mehreren Lasermarkierungen 95 auf der Kalibrierplatte 90 bezüglich des Kalibriermusters zu bestimmen. Basierend auf den ermittelten Markierungspositionen werden für alle der vorgegebenen Scannereinstellungen Scanner-Kalibrierdaten ermittelt, um den vorgegebenen Scannereinstellungen jeweils eine Position im Weltkoordinatensystem 200 zuordnen zu können. Optional kann eine Verifizierung S110 der Scanner-Kalibrierdaten durchgeführt werden, was unten in Bezug auf Figur 5 beschrieben ist.

Das Verfahren von Figur 4A unterscheidet sich von dem in Figur 4B veranschaulichten Verfahren lediglich dadurch, dass bei einer i-ten Scannereinstellung von den vorgegebenen Scannereinstellungen sowohl die Lasermarkierung erzeugt (S101) als auch das Bild aufgenommen (S102) wird, bevor diese Schritte für eine (i+1)-ten Scannereinstellung wiederholt werden. Möglicherweise werden, wie in Figur 4A gezeigt, auch der Schritt S103 des Ermittelns der Markierungsposition der bei dieser i-ten Scannereinstellung erzeugten Lasermarkierung und optional auch der Schritt S104 des Ermittelns von Scanner-Kalibrierdaten für die i-te Scannereinstellung durchgeführt, bevor die Scannereinstellung zur (i+1)-ten Scannereinstellung geändert wird. Alternativ können, wie in Figur 4B gezeigt, zuerst alle Lasermarkierungen bei allen der vorgegebenen Scannereinstellungen erzeugt werden (S101), um anschließend jeweils ein Bild bei allen vorgegebenen Scannereinstellungen aufzunehmen (S102). Hier wird also jede der vorgegebenen Scannereinstellungen zweimal vorgenommen.

Beim Ermitteln S103 der Markierungsposition kann eine Pixelposition der Lasermarkierung bezüglich des Kalibriermusters im jeweiligen Bild bestimmt werden, das mit derselben Scannereinstellung aufgenommen wurde, mit der auch die Lasermarkierung 95 erzeugt wurde. Insbesondere kann eine Pixelposition der Lasermarkierung 95 mit einer Pixelposition zumindest eines Mustermerkmals einer Musterzelle 91, in der sich die Lasermarkierung befindet, verglichen werden, um für die jeweilige Scannereinstellung eine Markierungsposition in Weltkoordinaten zu berechnen. Hier bezeichnet eine Pixelposition eine Position in einem durch die Beobachtungsvorrichtung 60 aufgenommenen Bild, d.h. eine Position im Pixelkoordinatensystem. Ein Mustermerkmal kann beispielsweise zumindest eines der folgenden sein: ein Mittelpunkt der Musterzelle 91, eine linke obere Ecke der Musterzelle 91, eine linke untere Ecke der Musterzelle 91, eine rechte obere Ecke der Musterzelle 91, eine rechte untere Ecke der Musterzelle 91, eine linke Kante der Musterzelle 91, eine rechte Kante der Musterzelle 91, eine obere Kante der Musterzelle 91, und eine untere Kante der Musterzelle 91. Beispielsweise kann, nachdem die Lasermarkierung 95 erzeugt ist, die Markierungsposition bestimmt werden, indem die Pixelposition der Lasermarkierung 95 mit den Pixelpositionen von den vier Ecken, die die Lasermarkierung 95 umgeben, verglichen wird. Da das Kalibriermuster, insbesondere eine Größe der Musterzellen 91 und/oder eine Position der Musterzelle 91 im Weltkoordinatensystem 200, bekannt ist, kann die Markierungsposition im Weltkoordinatensystem 200 bestimmt werden.

Die Scanner-Kalibrierdaten können eine Liste von Markierungspositionen in Weltkoordinaten und den jeweiligen Scannereinstellungen umfassen. Aus diesen Informationen, die ggf. vorbearbeitet werden können, kann eine Korrekturdatei bestehend aus einer Nachschlagetabelle von Positionen in Weltkoordinaten und deren entsprechenden Scannereinstellungen erstellt werden. Alternativ kann eine Korrekturdatei aus Parametern eines mathematischen Modells bestehen, das den Zusammenhang zwischen Positionen in Weltkoordinaten und deren entsprechenden Scannereinstellungen beschreibt. Die Korrekturdatei kann beispielsweise in der Steuerung 70 gespeichert werden, um die Scannervorrichtung 80 anzusteuern.

In Figuren 5A und 5B sind Prozesse des Verifizierens S110 der Scanner-Kalibrierdaten gemäß Ausführungsformen der Erfindung dargestellt, was optional nach dem Kalibrieren S100 der Scannervorrichtung 80 durchgeführt werden kann. Das Verifizieren S 110 der Scanner-Kalibrierdaten kann folgende Schritte umfassen: Auf der Kalibrierplatte 90 wird jeweils eine Verifizierungs-Lasermarkierung bei einer Vielzahl von korrigierten Scannereinstellungen erzeugt (S 111). Die korrigierten Scannereinstellungen sind Scannereinstellungen, die basierend auf den jeweiligen Scanner-Kalibrierdaten korrigiert wurden. Die korrigierten Scannereinstellungen entsprechen einer vorgegebenen Position in einer Ziel-Musterzelle, d.h. in der Musterzelle 91, in der die Verifizierungs-Lasermarkierung erzeugt werden soll. Beispielsweise können die korrigierten Scannereinstellungen jeweils einem Mittelpunkt in den Ziel-Musterzellen entsprechen. Die vorgegebene Position in der Ziel-Musterzelle kann relativ zu mindestens einem Mustermerkmal der Ziel-Musterzelle vorgegeben sein. Mit jeder von der Vielzahl der korrigierten Scannereinstellungen wird zudem jeweils ein Bild mittels der Beobachtungsvorrichtung 60 aufgenommen (S112) und eine Markierungsposition der Verifizierungs-Lasermarkierung bezüglich des Kalibriermusters, insbesondere bezüglich des Mustermerkmals der Ziel-Musterzelle, ermittelt (S113). Eine Pixelposition der Verifizierungs-Lasermarkierung im jeweiligen Bild wird anschließend mit der vorgegebenen Position in der Ziel-Musterzelle verglichen (S114). Somit kann anhand des entsprechenden aufgenommenen Bildes überprüft werden, ob mit einer korrigierten Scannereinstellung, die beispielsweise dem Mittelpunkt einer Ziel-Musterzelle entspricht, tatsächlich eine Verifizierungs-Lasermarkierung an der vorgegebenen Position erzeugt wurde.

Der Ablauf des Verifizierens ist in Figur 5A gemäß Figur 4A illustriert, wobei bei jeder der korrigierten Scannereinstellungen in einem ersten Schritt eine Verifizierungs-Lasermarkierung erzeugt und in einem zweiten Schritt ein Bild aufgenommen wird, und diese beiden Schritte für alle korrigierten Scannereinstellungen wiederholt werden. Jedoch können auch beim Verifizieren S110, wie in Figur 5B entsprechend zu Figur 4B gezeigt, in einem ersten Schritt die Verifizierungs-Lasermarkierungen bei allen korrigierten Scannereinstellungen erzeugt, und in einem zweiten Schritt alle Bilder bei allen korrigierten Scannereinstellungen aufgenommen werden.

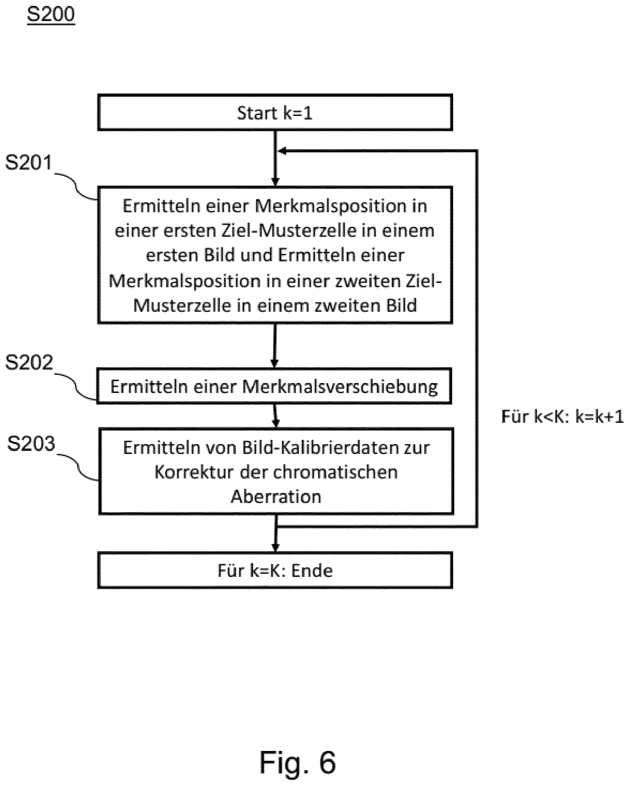

Zusätzlich kann ein Kalibrieren der Beobachtungsvorrichtung 60 erforderlich sein, beispielsweise um ein bildbasiertes Positionieren des Laserstrahls 4 zu ermöglichen. Für das Kalibrieren der Beobachtungsvorrichtung 60 kann dieselbe Kalibrierplatte 90 und/oder derselbe Bildanalyse- bzw. Mustererkennungs-Algorithmus wie für das Kalibrieren der Scannervorrichtung 80 verwendet werden. Somit kann der Aufwand sehr gering gehalten werden. In Figur 6 ist ein Ablaufdiagramm zum Kalibrieren der Beobachtungsvorrichtung 60 gemäß Ausführungsformen der Erfindung angegeben, um eine chromatische Aberration in Abhängigkeit von der Scannereinstellung zu korrigieren. Wenn die Scannervorrichtung 80 perfekt kalibriert wäre, müsste das Bild vom Kalibriermuster unverändert bleiben, wenn die Scannereinstellung genau um eine Periode des Kalibriermusters verschoben wird. Aufgrund chromatischer Aberration tritt jedoch ein leichter Bildversatz auf, sodass das Kalibriermuster zwischen den beiden Bildern nicht mehr deckungsgleich ist. Beim Kalibrieren der Beobachtungsvorrichtung 60 zur Korrektur der chromatischen Aberration kann dieser Versatz für jede Scannereinstellung aufgezeichnet werden.

Für das Kalibrieren der Beobachtungsvorrichtung 60 kann eine Vielzahl von Scannereinstellungen in K Vergleichspaare mit jeweils einer ersten und einer zweiten Scannereinstellung aufgeteilt werden. Das Kalibrieren der Scannervorrichtung 80 ist hier schon abgeschlossen, sodass es sich bei den ersten und zweiten Scannereinstellungen um basierend auf den Scanner-Kalibrierdaten korrigierte Scannereinstellungen handelt. Für jedes der Vergleichspaare von Scannereinstellungen kann eine Position eines Merkmals in einer ersten Ziel-Musterzelle, die der ersten Scannereinstellung des Vergleichspaares entspricht, in einem ersten Bild, das mit dieser ersten Scannereinstellung des Vergleichspaares aufgenommen wurde, und eine Position eines Merkmals in einer zweiten Ziel-Musterzelle, die der zweiten Scannereinstellung des Vergleichspaares entspricht, in einem zweiten Bild, das mit dieser zweiten Scannereinstellung des Vergleichspaares aufgenommen wurde, ermittelt werden (S201). Die erste Ziel-Musterzelle und die zweite Ziel-Musterzelle können benachbarte Musterzellen im Kalibriermuster sein. Mit anderen Worten kann die erste Scannereinstellung bezüglich der zweiten Scannereinstellung um eine Periode des Kalibriermusters verschoben sein. Anschließend kann für jedes der Vergleichspaare von Scannereinstellungen eine Merkmalsverschiebung vom ersten Bild zum zweiten Bild ermittelt werden (S202). Hierbei können die Pixelposition des Merkmals der ersten Ziel-Musterzelle im ersten Bild mit der Pixelposition des Merkmals der zweiten Ziel-Musterzelle im zweiten Bild unter Berücksichtigung der Verschiebung zwischen der ersten und zweiten Scannereinstellung und einer Periode des Kalibriermusters verglichen werden. Basierend auf den Merkmalsverschiebungen für die Vergleichspaare von Scannereinstellungen können Bild-Kalibrierdaten zur Korrektur der chromatischen Aberration für die Vielzahl von Scannereinstellungen ermittelt werden (S203).

Das Merkmal der ersten Ziel-Musterzelle und das Merkmal der zweiten Ziel-Musterzelle können gleich sein, z.B. jeweils der Mittelpunkt der Ziel-Musterzelle. Das Merkmal der ersten Ziel-Musterzelle und das Merkmal der zweiten Ziel-Musterzelle können ein Mustermerkmal sein, oder auch eine Verifizierungs-Lasermarkierung in der Ziel-Musterzelle, wenn beim Verifizieren der Scanner-Kalibrierdaten die vorgegebenen Positionen der Verifizierungs-Lasermarkierungen in den jeweiligen Ziel-Musterzellen identisch sind. In einem Beispiel können die Pixelpositionen der Mittelpunkte aller Ziel-Musterzellen der Scannereinstellungen sowie deren Verschiebung bezüglich einer Scannereinstellung entsprechend einer Nullposition (unausgelenkter Laserstrahl) ermittelt werden. Die Bild-Kalibrierdaten zur Korrektur der chromatischen Aberration können eine Liste von den Scannereinstellungen entsprechenden Positionen in Weltkoordinaten und von den für die Scannereinstellungen ermittelten Merkmalsverschiebungen in Pixelkoordinaten umfassen. Die Liste kann in eine Nachschlagetabelle konvertiert werden, die die exakte Position des Laserstrahls 4 in Pixelkoordinaten der Beobachtungsvorrichtung 60 für eine gegebenen Scannereinstellung angibt. Alternativ können die Bild-Kalibrierdaten zur Korrektur der chromatischen Aberration eine Liste von Verschiebungsvektoren in Pixelkoordinaten und jeweiligen, den Scannereinstellungen entsprechenden Positionen in Weltkoordinaten umfassen und die Verschiebungsvektoren jeweils eine Abweichung der Position des Merkmals der zweiten Ziel-Musterzelle im zweiten Bild von einer theoretischen Position des Merkmals der zweiten Ziel-Musterzelle, die basierend auf der Verschiebung zwischen der ersten und zweiten Scannereinstellung und einer Periode des Kalibriermusters zu erwarten ist, angeben.

Das Kalibrieren der Beobachtungsvorrichtung 60 kann das Aufnehmen des ersten und zweiten Bildes für die Vergleichspaare von Scannereinstellungen umfassen. Alternativ können die ersten und zweiten Bilder für die Vergleichspaare von Scannereinstellungen Bilder sein, die für das Kalibrieren der Scannervorrichtung 80 aufgenommen wurden. In diesem Fall kann bei dem Ermitteln S202 der Merkmalsverschiebung neben der Verschiebung zwischen der ersten und zweiten Scannereinstellung und der Periode des Kalibriermusters zusätzlich die entsprechenden Scanner-Kalibrierdaten berücksichtigt werden.

Zusätzlich zur chromatischen Aberration können weitere optische Fehler auftreten, die in einer Bildverzerrung resultieren. Daher kann das Kalibrieren der Beobachtungsvorrichtung 60 ferner eine Bildverzerrungskorrektur S210 umfassen, um beispielsweise Scannereinstellungs-abhängige Effekte, wie Änderungen im Abbildungsmaßstab, Rotationen, Schereffekte und radiale Linsenverzerrungseffekte o.ä., für das gesamte Scanfeld zu korrigieren.

Die Bildverzerrungskorrektur S210 kann an einigen oder allen der ersten und/oder zweiten Bildern für die Korrektur der chromatischen Aberration durchgeführt werden. Vorzugsweise wird die Bildverzerrungskorrektur S210 an Bildern durchgeführt, die mehreren, über das gesamte Scanfeld verteilten Scannereinstellungen entsprechen. Jedes Bild wird zunächst basierend auf den Bild-Kalibrierdaten zur Korrektur der chromatischen Aberration entsprechend der jeweiligen Scannereinstellung, bei der das Bild aufgenommen wurde, korrigiert (S211). Anschließend werden für eine Vielzahl von Musterzellen 91 jeweils die Pixelposition von zumindest einem Merkmal ermittelt (S212). Beispielsweise können die Pixelpositionen von allen Ecken aller Musterzellen 91 in dem Bild ermittelt werden. Basierend auf den Pixelpositionen und bekannten Abständen der Merkmale der Musterzellen in Weltkoordinaten kann für die jeweilige Scannereinstellung, bei der das Bild aufgenommen wurde, ein Modell zur Bildverzerrungskorrektur erstellt werden (S213). Auf diese Weise können basierend auf einem Abstand zwischen zwei Pixelpositionen in einem Bild mittels des Modells zur Bildverzerrungskorrektur eine relative Position der beiden Pixelpositionen im Weltkoordinatensystem 200 bestimmt werden.

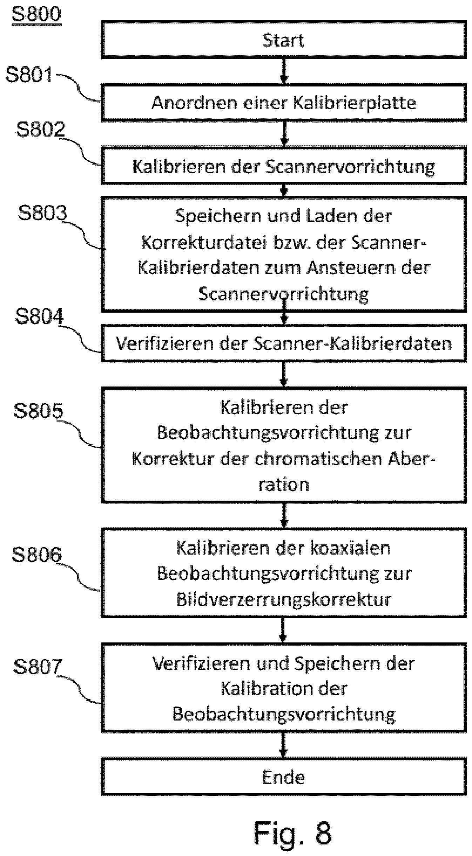

In Figur 8 ist eine Ausführungsform zur kombinierten Kalibrierung S800 einer Scannervorrichtung 80 und einer koaxialen Beobachtungsvorrichtung 60 eines Laserbearbeitungssystems 1 gezeigt. In einem Schritt S801 kann eine Kalibrierplatte 90 in dem Scanfeld des Laserbearbeitungssystems 1 angeordnet und annähernd zu den Achsen des Scannerkoordinatensystems 800 ausgerichtet werden. Vorzugsweise ist die Kalibrierplatte größer als das Scanfeld bzw. deckt dieses vollständig ab. Anschließend kann in Schritt S802 ein Kalibrieren der Scannervorrichtung durchgeführt werden, wobei Lasermarkierungen 95 auf der Kalibrierplatte 80 erzeugt werden und für jede Lasermarkierung die Position in Weltkoordinaten mit Hilfe der koaxialen Beobachtungsvorrichtung 60 und eines Kalibriermusters der Kalibrierplatte 90 bestimmt wird. Anschließend wird eine Korrekturdatei mit Scanner-Kalibrierdaten, also beispielsweise bestehend aus einer Nachschlagetabelle mit Weltkoordinatenpositionen und den entsprechenden Scannereinstellungen, erzeugt. Als Schritt S802 kann auch das in Figur 4A oder 4B gezeigte Verfahren S100 zum Kalibrieren der Scannervorrichtung 80 mit Schritten S101 bis S104 durchgeführt werden. In Schritt S803 wird die Korrekturdatei bzw. werden die Scanner-Kalibrierdaten gespeichert und zum Ansteuern der Scannervorrichtung 80 geladen. In Schritt S804 erfolgt ein Verifizieren der Kalibration der Scannervorrichtung, indem erneut Lasermarkierungen auf derselben Kalibrierplatte 90 erzeugt werden. Als Schritt S804 kann auch der in Figur 5A oder 5B gezeigte Prozess S110 zum Verifizieren der Scanner-Kalibrierdaten durchgeführt werden. In Schritt S805 wird dieselbe Kalibrierplatte 80 und derselbe Mustererkennungs-Algorithmus (z.B. ein Ecken- und/oder Kanten-Erkennungsalgorithmus) zum Kalibrieren der Beobachtungsvorrichtung zur Korrektur der chromatischen Aberration verwendet. Beispielsweise können alle Ecken einer Ziel-Musterzelle für jede Scannereinstellung im Scanfeld erfasst und eine Verschiebung der Eckpositionen verwendet werden, um einen Offset der chromatischen Aberration für jede Scannereinstellung zu ermitteln. Die Offsets der chromatischen Aberration werden verwendet, um eine Nachschlagetabelle oder Funktion der Scannereinstellung versus Pixeloffset zu erzeugen. Als Schritt S805 kann auch das in Figur 6 gezeigte Verfahren S200 durchgeführt werden. In Schritt S806 erfolgt ein Kalibrieren der koaxialen Beobachtungsvorrichtung zur Bildverzerrungskorrektur. Durch Kenntnis der Eckpositionen in Pixelkoordinaten und der relativen Position in Weltkoordinaten kann ein Modell zur Bildverzerrungskorrektur gefunden werden, das eine relative Position in Pixelkoordinaten zu einer relativen Position in Weltkoordinaten für eine gegebene Scannereinstellung umwandelt. Als Schritt S806 kann das Verfahren S210 durchgeführt werden. In Schritt S807 kann die Kalibration der Beobachtungsvorrichtung verifiziert und gespeichert werden.

Gemäß der vorliegenden Offenbarung kann eine Scannervorrichtung eines Laserbearbeitungssystems unter Verwendung einer ein Kalibriermuster aufweisenden Kalibrierplatte und einer in dem Laserbearbeitungssystem integrierten, koaxialen Beobachtungsvorrichtung ohne Zuhilfenahme von externen Messinstrumenten kalibriert werden. Dadurch kann die Effizienz der Kalibrierung stark erhöht und Kosten für die Kalibrierung stark reduziert werden. Ein Verifizieren der Kalibrierung kann leicht und unmittelbar im Anschluss an die Kalibrierung durchgeführt werden.

Zudem kann dasselbe Setup zum Kalibrieren der koaxialen Beobachtungsvorrichtung zur Korrektur einer chromatischen Aberration und/oder zur Korrektur von Bildverzerrungen verwendet werden. Ein Kalibrieren von zwei Systemen bzw. Vorrichtung auf dieselbe Referenz ist allgemein viel wichtiger als ein Kalibrieren derselben auf eine absolute Referenz. Dies führt zu geringeren Anforderungen an die Kalibrierplatte und an einen Ausrichtungsprozess beim Anordnen derselben. Insbesondere kann gemäß der vorliegenden Offenbarung die koaxiale Beobachtungsvorrichtung auf dieselbe Referenz kalibriert werden wie die Scannervorrichtung, sodass beide Kalibrierungen denselben Erfassungsalgorithmus bzw. Mustererkennungs-Algorithmus und dieselbe Längenreferenz verwenden können. Da Beobachtungsvorrichtung und Scannervorrichtung mit derselben Referenz kalibriert sind, werden ferner leichte Skalierungsfehler in der Kalibrierplatte besser toleriert, verglichen mit einem getrennten Kalibrieren der beiden Vorrichtungen mit verschiedenen Verfahren. Außerdem kann das Kalibrieren der Scannervorrichtung und/oder der Beobachtungsvorrichtung automatisiert erfolgen, mit Ausnahme des einmaligen Anordnens der Kalibrierplatte.

### Bezugszeichenliste

- 1: Laserbearbeitungssystem
- 2: Oberfläche (Werkstück, Kalibrierplatte)
- 4: Laserstrahl
- 5: Laserleitfaser
- 6: Beobachtungsstrahlengang
- 10: Kollimationsoptik
- 50: Strahlkoppelelement
- 30: Fokussieroptik
- 60: Beobachtungsvorrichtung
- 70: Steuerung
- 80: Scannervorrichtung
- 81: Scanelement
- 90: Kalibrierplatte
- 91: Musterzelle
- 95: Lasermarkierung
- 200: Weltkoordinatensystem
- 600: Pixelkoordinatensystem
- 800: Scannerkoordinatensystem

## Patentansprüche

1. Verfahren zum Kalibrieren eines Laserbearbeitungssystems (1) mit einer Scannervorrichtung (80) zum Auslenken eines Laserstrahls (4) auf eine Vielzahl von Positionen auf einer Oberfläche (2) und mit einer Beobachtungsvorrichtung (60), deren Beobachtungsstrahlengang (6) zumindest abschnittsweise koaxial zum Laserstrahlengang und über die Scannervorrichtung (80) verläuft, umfassend ein Kalibrieren der Scannervorrichtung (80) mit den Schritten:
Erzeugen (S101) von Lasermarkierungen (95) auf einer Kalibrierplatte (90) mit einer Vielzahl von vorgegebenen Scannereinstellungen;
Aufnehmen (S102) jeweils eines Bildes von der Kalibrierplatte (90) und einem Kalibriermuster auf der Kalibrierplatte (90), das periodisch angeordnete Musterzellen (91) aufweist, durch die Beobachtungsvorrichtung (60) und Ermitteln (S103) einer Markierungsposition zumindest einer der Lasermarkierungen (95) auf der Kalibrierplatte (90) bezüglich des Kalibriermusters in jedem Bild; und
Ermitteln (S104) von Scanner-Kalibrierdaten für jede der vorgegebenen Scannereinstellungen basierend auf den ermittelten Markierungspositionen, um den vorgegebenen Scannereinstellungen jeweils eine Position in einem Weltkoordinatensystem (200) zuzuordnen.

2. Verfahren nach Anspruch 1,
wobei die Lasermarkierungen (95) auf der Kalibrierplatte (90) mit dem Kalibriermuster erzeugt werden; oder
wobei nach dem Erzeugen (S101) der Lasermarkierungen (95) auf der Kalibrierplatte (90) eine transparente Folie mit dem Kalibriermuster auf die Kalibrierplatte (90) gelegt wird.

3. Verfahren nach einem der vorhergehenden Ansprüche, wobei beim Kalibrieren der Scannervorrichtung (80):
bei jeder der vorgegebenen Scannereinstellungen ein Bild von der Kalibrierplatte (90) aufgenommen wird (S102) und eine Markierungsposition der jeweiligen Lasermarkierung (95), die mit diesen Scannereinstellungen erzeugt worden ist, auf der Kalibrierplatte (90) bezüglich des Kalibriermusters in jedem Bild ermittelt wird (S103); und/oder
in einem ersten Schritt die Lasermarkierungen (95) mit allen vorgegebenen Scannereinstellungen erzeugt werden, und in einem zweiten Schritt alle Bilder mit allen vorgegebenen Scannereinstellungen aufgenommen werden, oder
mit jeder der vorgegebenen Scannereinstellungen in einem ersten Schritt eine Lasermarkierung (95) erzeugt und in einem zweiten Schritt ein Bild aufgenommen wird, und diese beiden Schritte für alle vorgegebenen Scannereinstellungen wiederholt werden.

4. Verfahren nach einem der vorhergehenden Ansprüche, wobei zum Ermitteln der Markierungsposition im Bild eine Pixelposition der Lasermarkierung (95) mit einer Pixelposition zumindest eines Mustermerkmals einer Musterzelle (91), in der sich die Lasermarkierung (95) befindet, verglichen wird, um für die jeweilige Scannereinstellung eine Markierungsposition im Weltkoordinatensystem (200) zu berechnen.

5. Verfahren nach Anspruch 4, wobei das zumindest eine Mustermerkmal der Musterzelle (91) zum Ermitteln der Markierungsposition zumindest eine Kante, zumindest eine Ecke, und/oder einen Mittelpunkt der Musterzelle umfasst.

6. Verfahren nach einem der vorhergehenden Ansprüche, wobei die Scanner-Kalibrierdaten eine Liste von Markierungspositionen in Weltkoordinaten und den jeweiligen Scannereinstellungen umfassen; oder
wobei die Scanner-Kalibrierdaten eine Liste von Offset-Vektoren in Weltkoordinaten und den jeweiligen Scannereinstellungen umfassen und die Offset-Vektoren jeweils einen Offset zwischen der ermittelten Markierungsposition und einer der jeweiligen Scannereinstellung entsprechenden theoretischen Position der Lasermarkierung angeben; oder
wobei die Scanner-Kalibrierdaten eine Korrekturdatei aus Parametern eines mathematischen Modells umfassen, das den Zusammenhang zwischen Positionen im Weltkoordinatensystem (200) und den entsprechenden Scannereinstellungen beschreibt.

7. Verfahren nach einem der vorhergehenden Ansprüche, wobei das Kalibrieren der Scannervorrichtung (80) ferner ein Verifizieren (S110) der Scanner-Kalibrierdaten umfasst, wobei für eine Vielzahl von Ziel-Musterzellen jeweils folgende Schritte durchgeführt werden:
Erzeugen (S111) einer Verifizierungs-Lasermarkierung auf der Kalibrierplatte (90) mit einer basierend auf den Scanner-Kalibrierdaten korrigierten Scannereinstellung, die einer vorgegebenen Position in einer Ziel-Musterzelle entspricht;
Aufnehmen (S112) eines Bildes von der Kalibrierplatte mit der korrigierten Scannereinstellung durch die Beobachtungsvorrichtung (60) und Ermitteln (S113) einer Markierungsposition der Verifizierungs-Lasermarkierung auf der Kalibrierplatte (90) bezüglich der Ziel-Musterzelle; und
Vergleichen (S114) der ermittelten Markierungsposition der Verifizierungs-Lasermarkierung mit der vorgegebenen Position.

8. Verfahren nach einem der vorhergehenden Ansprüche, ferner umfassend ein Kalibrieren (S200) der Beobachtungsvorrichtung (60) mit den Schritten:
Ermitteln (S201) einer Position eines Merkmals einer ersten Ziel-Musterzelle in einem ersten Bild von der Kalibrierplatte, aufgenommen mit einer ersten Scannereinstellung entsprechend der ersten Ziel-Musterzelle, und Ermitteln einer Position eines Merkmals einer zweiten Ziel-Musterzelle in einem zweiten Bild von der Kalibrierplatte, aufgenommen mit einer zweiten bezüglich der ersten Scannereinstellung verschobenen Scannereinstellung entsprechend der zweiten Ziel-Musterzelle, jeweils für eine Vielzahl von ersten und zweiten Scannereinstellungen;
Ermitteln (S202) einer Merkmalsverschiebung durch Vergleichen der Position des Merkmals der ersten Ziel-Musterzelle im ersten Bild mit einer Position des Merkmals der zweiten Ziel-Musterzelle im zweiten Bild unter Berücksichtigung der Verschiebung zwischen der ersten und zweiten Scannereinstellung und einer Periode des Kalibriermusters, jeweils für die Vielzahl von ersten und zweiten Scannereinstellungen; und
Ermitteln (S203) von Bild-Kalibrierdaten zur Korrektur der chromatischen Aberration für die Scannereinstellungen basierend auf den ermittelten Merkmalsverschiebungen.

9. Verfahren nach Anspruch 8, wobei für das Kalibrieren der Beobachtungsvorrichtung das Merkmal der Ziel-Musterzelle zumindest eine Kante, zumindest eine Ecke, einen Mittelpunkt und/oder eine Verifizierungs-Lasermarkierung der Ziel-Musterzelle umfasst.

10. Verfahren nach Anspruch 8 oder 9, wobei das Kalibrieren der Beobachtungsvorrichtung (60) jeweils für die Vielzahl von ersten und zweiten Scannereinstellungen umfasst:
Aufnehmen des ersten Bildes mit der ersten Scannereinstellung und Aufnehmen des zweiten Bildes mit der zweiten Scannereinstellung, wobei die erste und zweite Scannereinstellung basierend auf den Scanner-Kalibrierdaten korrigiert sind; oder
wobei das erste Bild jeweils ein für das Kalibrieren der Scannervorrichtung aufgenommenes Bild mit der der jeweiligen ersten Scannereinstellung entsprechenden Scannereinstellung ist und das zweite Bild jeweils ein für das Kalibrieren der Scannervorrichtung aufgenommenes Bild mit der der jeweiligen zweiten Scannereinstellung entsprechenden Scannereinstellung ist, und beim Ermitteln der Merkmalsverschiebung zusätzlich die entsprechenden Scanner-Kalibrierdaten berücksichtigt werden.

11. Verfahren nach Anspruch 8, 9 oder 10, wobei die Bild-Kalibrierdaten zur Korrektur der chromatischen Aberration eine Liste von den Scannereinstellungen entsprechenden Positionen in Weltkoordinaten und von den für die Scannereinstellungen ermittelten Merkmalsverschiebungen in Pixelkoordinaten umfassen; oder
wobei die Bild-Kalibrierdaten zur Korrektur der chromatischen Aberration eine Liste von Verschiebungsvektoren in Pixelkoordinaten und jeweiligen, den Scannereinstellungen entsprechenden Positionen in Weltkoordinaten umfassen und die Verschiebungsvektoren jeweils eine Abweichung der Position des Merkmals der zweiten Ziel-Musterzelle im zweiten Bild von einer theoretischen Position des Merkmals der zweiten Ziel-Musterzelle, die basierend auf der Verschiebung zwischen der ersten und zweiten Scannereinstellung und einer Periode des Kalibriermusters zu erwarten ist, angeben.

12. Verfahren nach einem der Ansprüche 8 bis 11, wobei die Verschiebung zwischen der ersten und zweiten Scannereinstellung einer Verschiebung um mindestens eine Periode des Kalibriermusters, insbesondere um ein ganzzahliges Vielfaches der Periode des Kalibriermusters, entspricht; und /oder
wobei die erste Ziel-Musterzelle und die zweite Ziel-Musterzelle aufeinanderfolgende Musterzellen im Kalibriermuster sind.

13. Verfahren nach einem der Ansprüche 8 bis 12, wobei das Kalibrieren der Beobachtungsvorrichtung (60) ferner eine Bildverzerrungskorrektur umfasst, wobei für einige oder alle der ersten und/oder zweiten Bilder jeweils folgende Schritte durchgeführt werden:
Korrigieren (S211) des Bildes basierend auf den Bild-Kalibrierdaten zur Korrektur der chromatischen Aberration entsprechend der Scannereinstellung bei Aufnahme des Bildes;
Ermitteln (S212) von Pixelpositionen von jeweils zumindest einem Merkmal von mehreren Musterzellen (91) in dem korrigierten Bild; und
Erstellen (S213) eines Modells zur Bildverzerrungskorrektur basierend auf einem Vergleich von Pixelabständen zwischen den ermittelten Pixelpositionen und entsprechenden Abständen der jeweiligen Merkmale auf der Kalibrierplatte in Weltkoordinaten für die jeweilige Scannereinstellung bei Aufnahme des Bildes.

14. Verfahren nach einem der vorausgehenden Ansprüche, wobei das Kalibriermuster ein Gittermuster oder ein Schachbrettmuster umfasst, und/oder
wobei die periodisch angeordneten Musterzellen (91) quadratisch, rechteckig, viereckig oder dreieckig sind.

15. Laserbearbeitungssystem (1) zum Bearbeiten eines Werkstücks mittels eines Laserstrahls (4), umfassend:
eine Scannervorrichtung (80) zum Auslenken des Laserstrahls (4) auf eine Vielzahl von Positionen auf einer Oberfläche (2);
eine Beobachtungsvorrichtung (60), deren Beobachtungsstrahlengang (6) koaxial zum Laserstrahlengang (4) über die Scannervorrichtung (80) verläuft; und
eine Steuerung (70), die eingerichtet ist, um ein Verfahren zum Kalibrieren des Laserbearbeitungssystems nach einem der vorausgehenden Ansprüche durchzuführen.
